# FASCICULE DE BREVET EUROPEEN

(11) **EP 0 981 796 B1**
(45) Date de publication et mention de la délivrance du brevet: **28.11.2001**
(21) Numéro de dépôt: 98924410.8
(22) Date de dépôt: 11.05.1998
(51) Int. Cl.: G06K 7/00, H04M 1/02, G06K 13/08

(54) **CONNECTEUR ELECTRIQUE POUR UNE CARTE A CIRCUIT(S) INTEGRE(S) A CONTACT**
ELEKTRISCHER VERBINDER FÜR EINE KONTAKTKARTE MIT INTEGRIERTEN SCHALTUNGEN
ELECTRIC CONNECTOR FOR CONTACT CARD WITH INTEGRATED CIRCUIT(S)

(30) Priorité: 13.05.1997 FR 9705808
(43) Date de publication de la demande: 01.03.2000
(73) Titulaire: ITT MANUFACTURING ENTERPRISES, INC., Wilmington, Delaware 19801 (US)
(72) Inventeur: BRICAUD, Hervé, F-39100 Dole (FR); PIZARD, Yves, F-39100 Dole (FR)
(74) Mandataire: Kohn, Philippe
(86) Numéro de dépôt international: FR9800932
(87) Numéro de publication internationale: WO9852137

(56) Documents cités:
- EP-A- 0 494 503
- EP-A- 0 520 080
- EP-A- 0 556 970
- EP-A- 0 633 633
- EP-A- 0 768 613
- DE-U- 9 308 399
- DE-U- 9 407 486

## Description

La présente invention concerne un connecteur électrique pour une carte à circuit intégré à contact.

L'invention concerne plus particulièrement un connecteur du type décrit et représenté dans le document DE-G-94.07486.0.

Ce document propose un connecteur pour le raccordement électrique d'une carte à circuit intégré dont une face inférieure comporte des plages de raccordement,
- du type comportant un socle inférieur en forme de plaque en matériau isolant formant support pour des éléments de contact électrique dont des extrémités libres de contact font saillie au delà du plan de la face supérieure du socle,
- du type comportant un couvercle supérieur qui comporte dans l'une de ses faces opposées un logement qui reçoit au moins partiellement la carte qui est introduite dans le logement longitudinalement d'avant en arrière, selon une direction parallèle à son plan général et à celui du couvercle,
- du type dans lequel le couvercle est monté pivotant par rapport au socle, autour d'un axe transversal d'articulation situé au voisinage des extrémités longitudinales arrière en vis-à-vis du socle et du couvercle, entre une position ouverte et une position fermée, de contact, dans laquelle le couvercle est sensiblement parallèle au socle et les plages de raccordement de la carte coopèrent avec les extrémités de contact des éléments de contact du socle,
- du type comportant une barre transversale de verrouillage du couvercle en position fermée qui s'étend au dessus de la face supérieure du couvercle sur lequel elle est montée coulissante longitudinalement entre une position extrême verrouillée et une position extrême déverrouillée, et
- du type dans lequel une des faces opposées de la carte est en appui contre le fond du logement tandis que la barre mobile de verrouillage coopère avec une portion de l'autre face de la carte pour maintenir cette dernière dans le logement.

Selon cette conception, le logement qui reçoit la carte est sous la face inférieure du couvercle. Il en résulte des difficultés pour la mise en place de la carte qui aboutissent à relever le couvercle selon un angle important (environ 120°) pour mettre la carte. De plus, l'encombrement du connecteur est important.

Afin de remédier à ces inconvénients en vue d'améliorer notamment l'ergonomie du connecteur pour faciliter plus particulièrement l'introduction de la carte, l'invention propose un connecteur, caractérisé en ce que le logement est formé dans la face supérieure du couvercle, et en ce que la face inférieure de la carte est en appui contre le fond du logement qui est évidé au moins partiellement de manière à dégager la partie de la face inférieure de la carte en regard des plages de raccordement.

Selon d'autres caractéristiques :
- la barre mobile de verrouillage est montée coulissante sur le couvercle entre une position extrême avant verrouillée et une position extrême arrière déverrouillée ;
- le couvercle comporte deux montants latéraux parallèles dont les faces transversales internes en vis-à-vis délimitent latéralement le logement de la carte, qui est ouvert longitudinalement vers l'avant, et qui sont reliés par au moins une traverse de liaison ;
- une plate-forme de pose de la carte en forme de barreau est agencée au voisinage des extrémités libres avant des montants et sa face supérieure définit un plan de pose de la face inférieure de la carte;
- chacun des deux montants latéraux comporte une glissière délimitant le fond du logement coplanaire avec la face supérieure du barreau, et la carte est en appui contre les glissières par les bords parallèles longitudinaux de sa face inférieure ;
- les glissières s'étendent longitudinalement sensiblement sur la moitié avant de la longueur des montants latéraux, et la traverse de liaison est une plaque transversale supérieure qui s'étend au dessus d'une partie avant de la face supérieure de la carte et sensiblement sur la moitié arrière de la longueur des montants latéraux ;
- la barre mobile de verrouillage est une plaque transversale qui est montée coulissante au dessus des montants latéraux, et ses extrémités transversales opposées sont repliées verticalement le long des faces transversales externes des montants latéraux, puis transversalement vers l'intérieur sous la forme de deux pattes de manière à délimiter deux couloirs de guidage et de retenue de la plaque de verrouillage sur le couvercle ;
- les deux pattes d'extrémités de la plaque de verrouillage sont repliées sous les faces inférieures des glissières ;
- la longueur longitudinale des pattes d'extrémités de la plaque de verrouillage est telle que, en position extrême avant verrouillée, elles s'étendent longitudinalement vers l'avant au delà des glissières pour constituer deux couloirs de verrouillage dans lesquels sont reçus des ergots correspondants du socle qui font saillie transversalement vers l'extérieur à partir des deux bords parallèles longitudinaux du socle qui, en position fermée, sont reçus entre les bords parallèles longitudinaux et opposés des extrémités en vis-à-vis des glissières ;
- l'épaisseur de la plaque de verrouillage est sensiblement égale à l'épaisseur de la traverse arrière de liaison en forme de plaque, et le bord transversal avant de cette dernière délimite une butée contre laquelle la plaque de verrouillage vient en appui longitudinal par son bord transversal arrière pour définir sa position extrême arrière déverrouillée.
- l'épaisseur du socle entre ses faces parallèles, inférieure et supérieure, et la hauteur des montants latéraux sont telles que, en position fermée du couvercle, le socle et la carte sont entourés latéralement par les montants latéraux ;
- des moyens d'articulation du couvercle sur le socle sont constitués par deux tronçons d'axe d'articulation, qui s'étendent transversalement vers l'extérieur chacun depuis l'un des deux bords parallèles longitudinaux du socle, et par deux logements cylindriques complémentaires dont chacun est formé à l'extrémité libre arrière de l'un des montants latéraux du couvercle ;
- les logements cylindriques sont ouverts radialement selon une direction sensiblement perpendiculaire à la face supérieure de la partie avant du couvercle et en direction de cette dernière pour permettre le montage des tronçons d'axe dans les logements par emboîtement élastique selon ladite direction radiale :
- le connecteur comporte des moyens élastiques qui sollicitent en permanence le couvercle, par rapport au socle, vers sa position ouverte ;
- les moyens élastiques agissent entre le couvercle et le socle et sont agencés entre des portions en vis-à-vis de la face inférieure du couvercle et de la face supérieure du socle au voisinage des extrémités longitudinales arrière de ces deux éléments ;
- les moyens élastiques sont agencés longitudinalement entre le bord transversal avant de la carte et le bord transversal arrière du connecteur ;
- lesdits moyens élastiques sont constitués par au moins une patte formant ressort qui est repliée pour s'étendre en porte-à-faux entre la face supérieure de la partie arrière du socle et une portion en vis-à-vis de la partie arrière de la face inférieure du couvercle ;
- les éléments de contact électrique sont constitués par des lames de contact déformables élastiquement qui s'étendent parallèlement à la direction longitudinale d'introduction de la carte et dont chacune se termine par une extrémité libre de raccordement qui s'étend longitudinalement au niveau d'un bord transversal d'extrémité du socle ;
- ladite patte est réalisée venue de matière avec une extrémité de raccordement d'une lame de contact électrique ;
- chacune desdites pattes est protégée latéralement par des ailes réalisées venues de matière avec le socle ;
- les moyens élastiques comportent au moins un élément déformable élastiquement réalisé venu de matière plastique par moulage avec le couvercle ;
- la face supérieure du socle comporte, au voisinage de son bord transversal d'extrémité avant, un doigt d'indexation en relief qui s'étend en regard d'un pan coupé du bord transversal arrière de la carte ;
- la partie centrale de la barre de verrouillage présente une flèche vers le bas de manière que sa face interne inférieure coopère par friction avec la portion en vis-à-vis de la face supérieure de la carte pour constituer un frein de carte ;
- la plaque formant traverse de liaison et la plaque formant barre de verrouillage comportent des ouvertures ou dégagements permettant un test des éléments de contact électrique en l'absence de carte (C) ;
- en position introduite de la carte, les coins opposés du bord transversal avant de la carte coopèrent avec des zones de butée de forme complémentaire agencées aux extrémités arrière des montants et dont la hauteur est nettement supérieure à l'épaisseur de la carte ;
- il comporte des moyens de liaison électrique au plan de masse du circuit imprimé d'une plaque qui porte le socle pour évacuer les charges électrostatiques de la carte ;
- l'entrée avant du logement d'introduction de la carte est entièrement dégagée de manière que le connecteur puisse recevoir une carte qui fait saillie à l'extérieur du connecteur et dont la portion en saillie est d'épaisseur supérieure à la partie reçue dans le logement.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessus d'un connecteur électrique conforme aux enseignements de l'invention qui est illustré en position fermée du couvercle, sans carte, et avec sa barre de verrouillage en position extrême avant verrouillée ;
- la figure 2 est une vue similaire à celle de la figure 1 avec la barre de verrouillage en position extrême arrière déverrouillée ;
- la figure 3 est une vue en perspective de dessus du couvercle du connecteur sans sa barre de verrouillage ;
- la figure 4 est une vue en perspective de dessous du couvercle illustré à la figure 3 ;
- la figure 5 est une vue en perspective de dessus du socle du connecteur sans ses éléments de contact électrique ;
- la figure 6 est une vue en perspective de dessous du socle illustré à al figure 5 ;
- la figure 7 est une vue en perspective de dessous de la barre de verrouillage;
- la figure 8 est une vue à plus petite échelle qui illustre en perspective le connecteur de la figure 1 avec son couvercle dans une position angulaire ouverte, la barre de verrouillage en position déverrouillée et sans carte ;
- la figure 9 est une vue similaire à celle de la figure 8 avec un autre angle de vue ;
- la figure 10 est une vue similaire à celle de la figure 9 sur laquelle une carte de type SIM ou MICROSIM est illustrée en cours d'introduction dans le logement du couvercle ;
- la figure 11 est une vue similaire à celle de la figure précédente sur laquelle la carte est représentée en position introduite dans le connecteur ;
- la figure 12 est une vue similaire à celle de la figure 11 avec le même angle de vue que celui de la figure 8 ;
- la figure 13 est une vue similaire à celle de la figure 11 sur laquelle le couvercle est illustré en position fermée avec sa barre de verrouillage en position verrouillée ;
- la figure 14 est une vue en perspective de dessous du connecteur illustré à la figure 13 ;
- la figure la figure 15 est une vue en perspective de détail et à plus grande échelle de la partie arrière du socle du connecteur sans les éléments de contact électrique ;
- la figure 16 est une vue similaire à celle de la figure 15 selon un angle de vue opposé ;
- la figure 17 est une vue en perspective à grande échelle d'un élément électrique de contact qui équipe la partie avant du connecteur ;
- la figure 18 est une vue en perspective à grande échelle d'un élément électrique de contact qui équipe la partie arrière du connecteur avec sa patte repliée formant ressort ;
- la figure 19 est une est une vue en perspective de détail et à grande échelle de la partie arrière du connecteur avec ses éléments de contact électrique ;
- la figure 20 est une vue similaire à celle de la figure 19, selon un angle opposé de vue avec le couvercle rabattu vers l'arrière ;
- la figure 21 est une vue en section et à grande échelle selon la ligne 21-21 de la figure 11 ;
- la figure 22 est une vue similaire à celle de la figure 21 prise en section selon la ligne 22-22 de la figure 13 ;
- la figure 23 est une vue en perspective et de dessous de la partie arrière d'une variante de réalisation du couvercle ;
- la figure 24 est une vue similaire à celle de la figure 7 qui illustre une variante de réalisation de la barre de verrouillage ;
- la figure 25 est une vue similaire à celle de la figure 21 et sur laquelle le connecteur est équipé de la variante de la barre de verrouillage illustrée à la figure 24 ;
- la figure 26 est une vue similaire à celle de la figure 8 qui illustre une variante du connecteur qui ne comporte notamment pas de doigt de doigt de détrompage et qui permet de recevoir une carte spéciale ;
- la figure 27 illustre en perspective une carte spéciale de plus grande dimension longitudinale qui peut être mise en place dans le connecteur de la figure 26 ; et
- les figures 28 et 29 sont des vues à plus grande échelle des détails D28 et D29 de la figure 26.

Dans le description qui va suivre, ainsi que dans les revendications, les termes "supérieur", "inférieur", "horizontal", "vertical", "avant" et "arrière" sont utilisés en référence aux figures pour simplifier la description et sa compréhension, sans qu'ils constituent une quelconque limitation de l'invention.

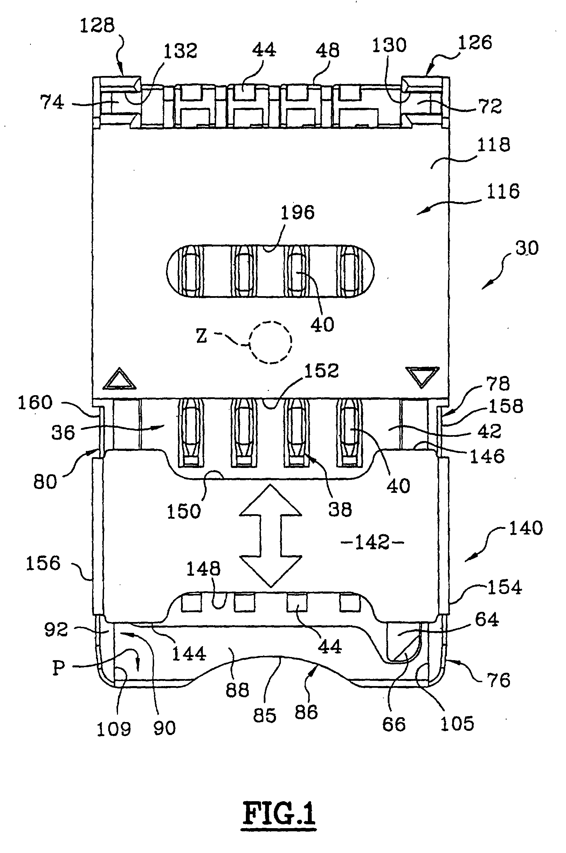

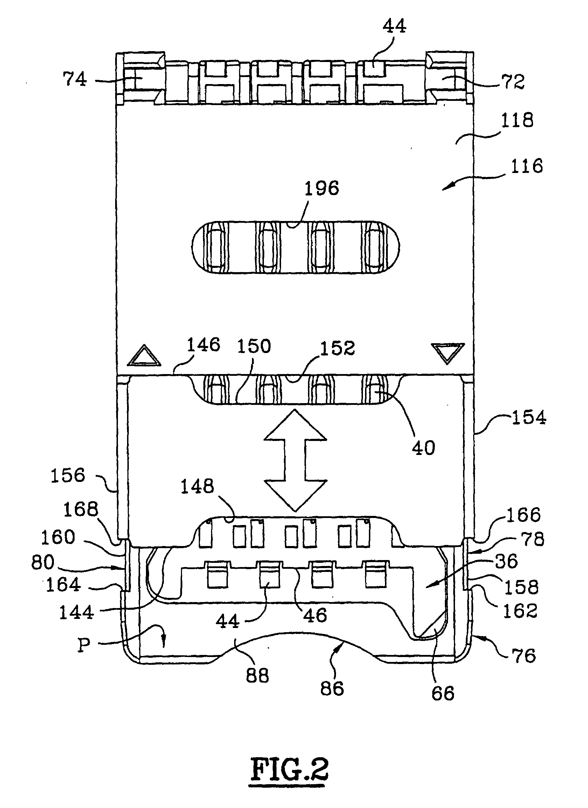

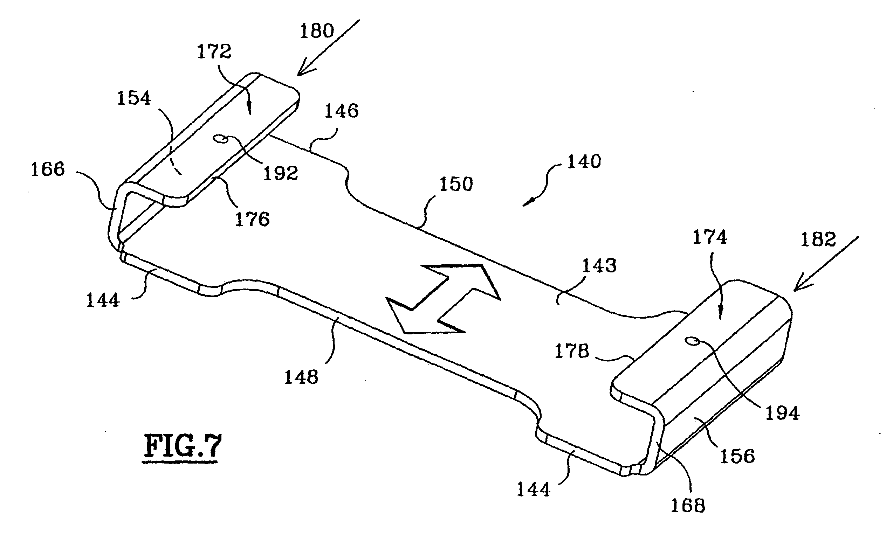

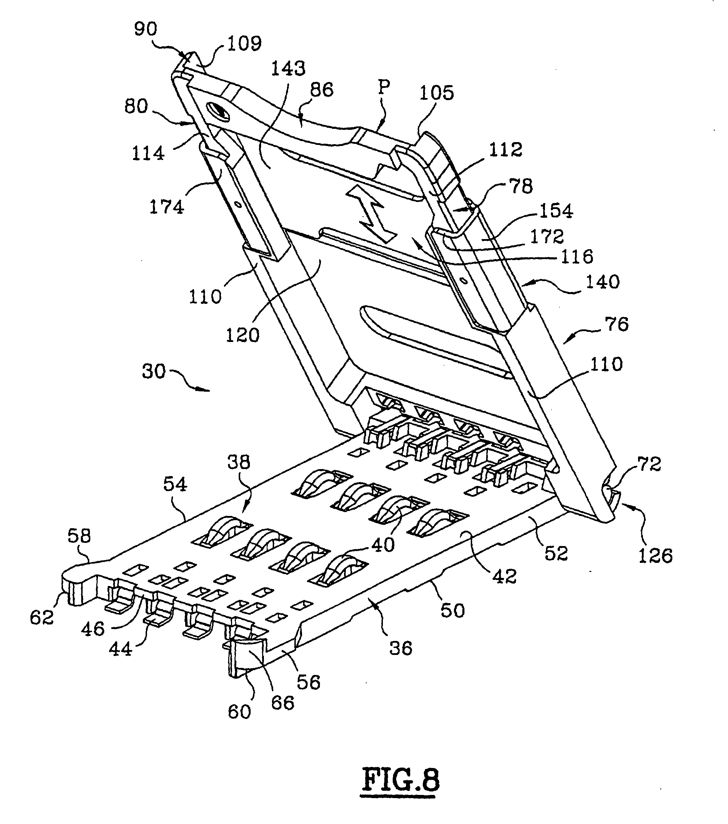

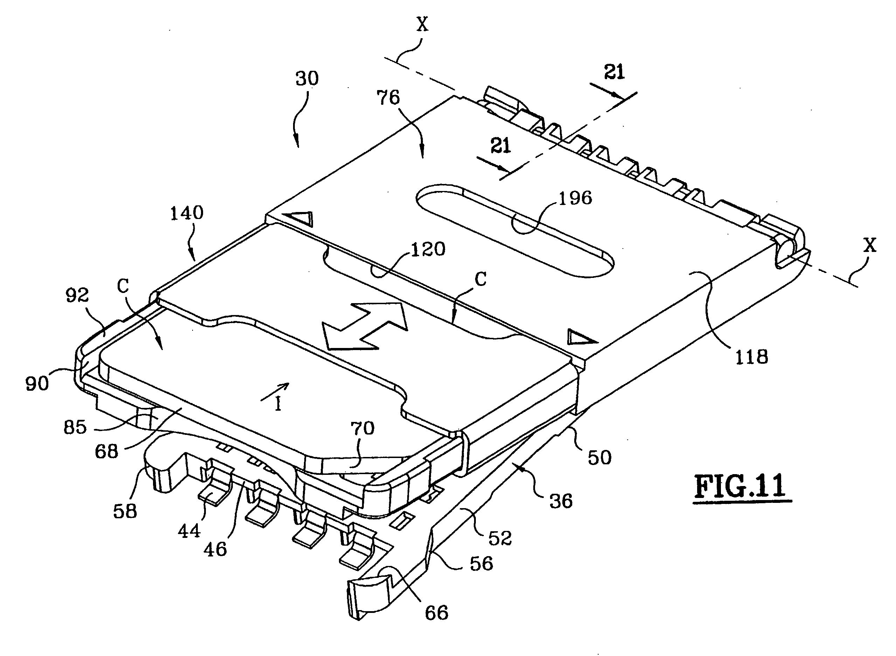

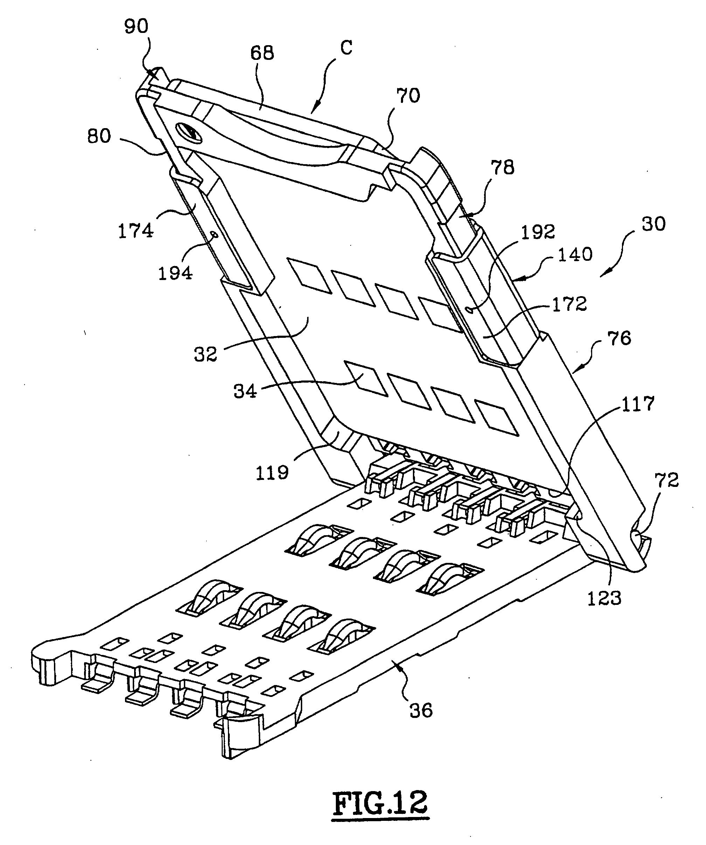

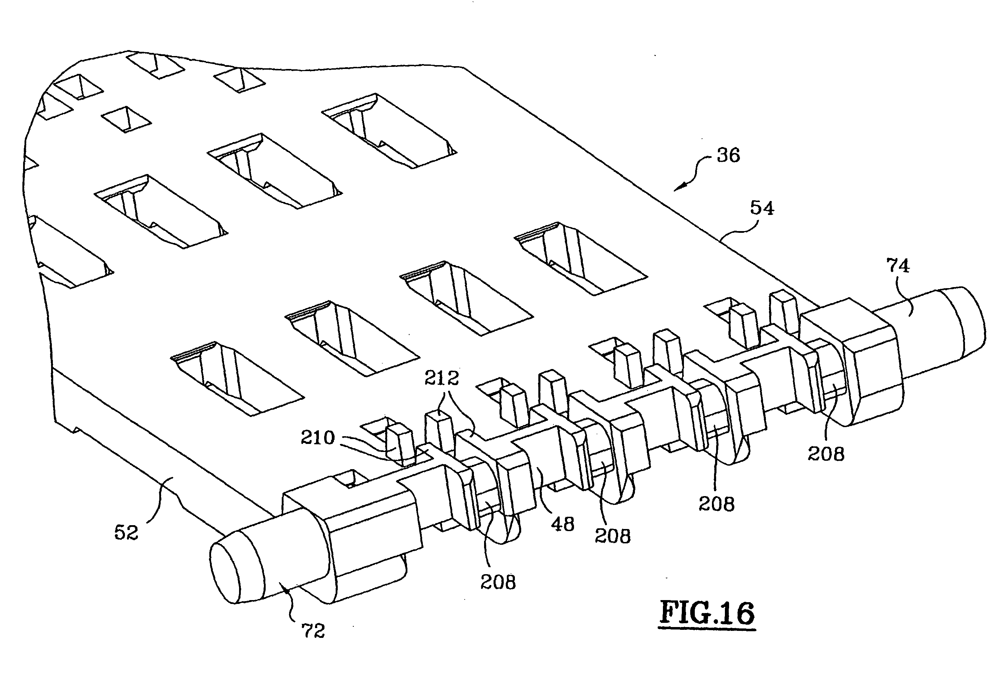

On a représenté sur les figures 1 à 22 un connecteur électrique 30 pour le raccordement électrique d'une carte C qui est ici une carte à circuit(s) intégré(s) à contact qui comporte sur sa face inférieure 32 des plages parallèles de raccordement électrique 34 orientées longitudinalement, c'est à dire parallèlement à la direction I d'introduction de la carte C dans le connecteur (voir figure 12).

Le connecteur 30 est constitué pour l'essentiel par un socle inférieur 36 en matière plastique isolante qui, selon une conception connue, sert de support à une série de lames 38 de contact électrique en matériau conducteur.

Chaque lame est d'orientation longitudinale et est insérée dans le socle 36. A titre de variante, le socle peut être surmoulé autour des lames de contact Chaque lame 38 comporte une extrémité libre de contact bombée 40 qui fait saillie verticalement au dessus de la face supérieure horizontale plane 42 du socle 36 pour permettre sa venue en contact avec une plage correspondante 34 de la carte C lorsque cette dernière est en position de raccordement. Chaque lame comporte une autre extrémité libre 44 dite de raccordement qui s'étend longitudinalement au niveau du bord transversal avant 46 ou arrière 48 du socle 36 pour permettre le raccordement, par soudage ou brasage, de cette extrémité avec une piste conductrice d'une plaque à circuit(s) imprimé(s) (non représentée) sur laquelle le socle 36 repose par sa face inférieure horizontale 50.

Selon des variantes connues (non représentées), la face inférieure 50 peut comporter des pions de positionnement du socle 36 sur la plaque à circuit imprimé et /ou des pieds qui surélèvent le connecteur. Dans ce dernier cas, et compte tenu du jeu qui existe alors entre la face inférieure 50 du socle et la plaque à circuit imprimé, il peut être souhaitable d'interposer entre ces éléments une plaque métallique formant coffret inférieur et latéral de blindage.

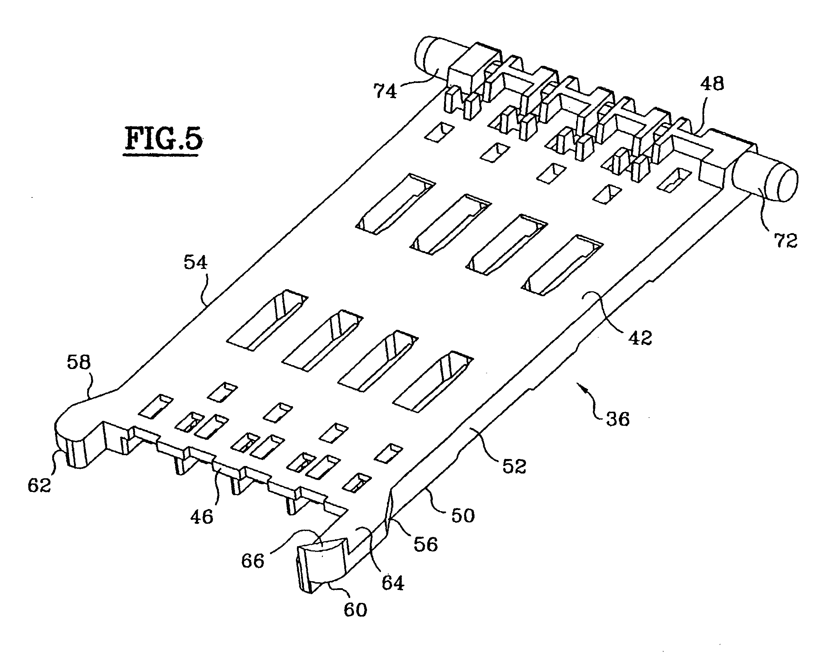

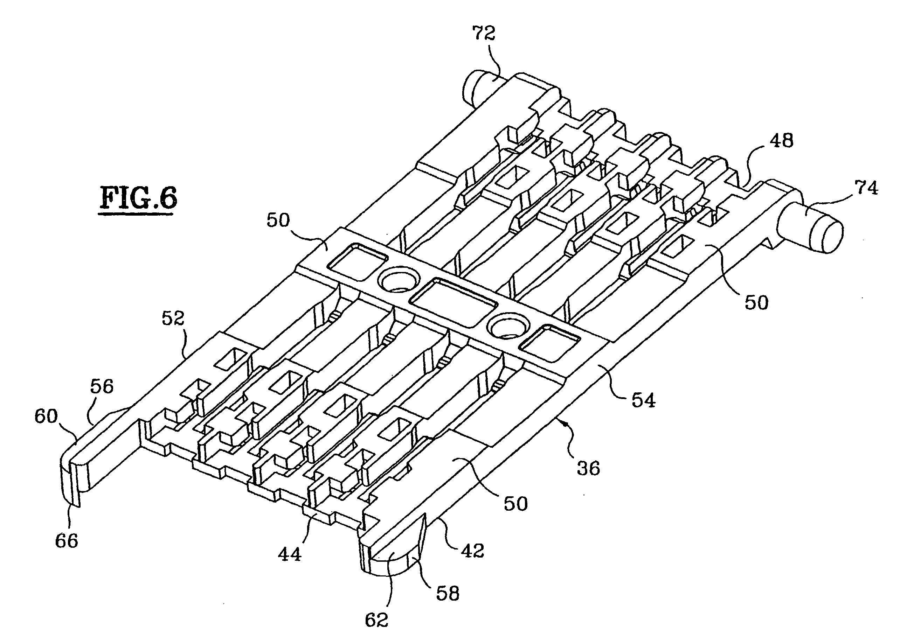

Comme on peut le voir notamment aux figures 5 et 6, le socle 36 est délimité transversalement par deux bords longitudinaux parallèles, d'orientation verticale, 52 et 54.

Au voisinage du bord transversal avant 46, chaque bord longitudinal 52, 54 comporte un ergot de verrouillage 56, 58 qui s'étend transversalement vers l'extérieur et dont l'épaisseur, comme on peut le voir sur la figure 6, est inférieure à celle du socle 36 de manière à ménager un jeu vertical entre les faces inférieures 60, 62 des ergots et la face inférieure 50 du socle 36.

L'ergot 56, dont la longueur vers l'avant est supérieure à celle de l'autre ergot 58, comporte sur sa face supérieure 64 un doigt vertical 66 de détrompage de la carte, et de retenue longitudinale de la carte dans son logement, et ceci dans le cas où, comme dans le mode de réalisation préféré de l'invention illustré sur les figures, la carte C est une carte du type "MICROSIM" dont le bord transversal arrière 68 comporte un angle ou pan 70 coupé à 45°.

Il est ainsi possible de retenir la carte sans faire appel à une cloison ou à une surépaisseur s'étendant transversalement à partir de la face supérieure du socle, et donc de raccourcir le socle.

A sa partie arrière, le socle 36 comporte deux tronçons 72 et 74 d'axe cylindrique d'articulation qui s'étendent transversalement vers l'extérieur à partir des bords longitudinaux 52 et 54.

Les tronçons 72 et 74 servent au montage sur le socle 36 d'un couvercle 76, formant réceptacle de la carte C, qui est articulé sur la partie arrière du socle 36 autour d'un axe géométrique X-X coaxial aux tronçons 72 et 74.

Le couvercle 76 est en forme générale de cadre moulé en matière plastique. Il est constitué pour l'essentiel par deux montants latéraux et parallèles 78 et 80 qui sont reliés entre eux, au voisinage de leurs extrémités libres longitudinales avant 82 et 84, par une plate-forme transversale en forme de barreau plat 86.

La face supérieure horizontale plane 88 du barreau 86 constitue un plan P de pose de la carte C dans un logement 90 de forme complémentaire formé, conformément aux enseignements de l'invention, dans la face supérieure 92 du couvercle 76.

Le bord transversal arrière 87 possède un cran interne 89 pour le passage du doigt 66, le couvercle présentant ainsi un trou ou orifice permettant au doigt de détrompage de traverser le couvercle. Le bord avant comporte un dégagement 85 pour faciliter la manipulation de la carte C lors de son insertion pour s'assurer qu'elle est introduite à fond et pour faciliter son extraction.

Le plan P de pose, qui permet de poser la face inférieure 32 de la carte C est coplanaire avec les faces supérieures 94 et 96 de deux glissières opposées 98 et 100 qui s'étendent transversalement vers l'intérieur du cadre à partir des faces transversales internes et opposées en vis-à-vis des montants 78 et 80.

Les glissières 98 et 100 s'étendent sensiblement sur la moitié avant de la longueur des montants latéraux et se terminent par une extrémité chanfreinée à distance du barreau inférieur 86. Les extrémités libres avant des montants sont chanfreinées pour permettre le montage, par déformation élastique de la barre de verrouillage qui sera décrite plus avant.

Les faces supérieures 94 et 96 s'étendent dans un plan qui est décalé verticalement vers le bas par rapport au plan de la face supérieure 92 de la partie avant du couvercle 76 de manière à délimiter deux facettes transversales internes parallèles et opposées 105 et 109 qui délimitent transversalement le logement 90 et qui coopèrent avec les bords longitudinaux et opposés 106 et 108 de la carte C pour guider l'introduction de cette dernière dans le logement 90 d'avant en arrière et selon la direction I d'introduction de la carte C.

Par rapport au plan de la face inférieure 110 du couvercle 76, les faces inférieures 112 et 114 des parties avant des montants sont décalées vers le haut de manière à ménager un jeu vertical entre ces faces 112 et 114 et le plan de la face inférieure 110 du couvercle 76.

La structure en forme de cadre évidé centralement du couvercle est renforcée par une plaque supérieure arrière 116, de très faible épaisseur, qui s'étend par sa face inférieure 120 sensiblement coplanaire avec la face supérieure 92 du couvercle 76 et sensiblement le long de la moitié arrière des montants 78 et 80.

Il existe un jeu vertical entre la face inférieure 120 de la traverse supérieure 116 et le plan de pose P, qui est très légèrement supérieure à l'épaisseur de la carte C de manière à permettre que cette dernière puisse être introduite, selon direction I d'introduction de la carte C, sous la plaque 116 et jusqu'à ce que le bord transversal avant 117 de la carte C vienne en butée contre le bord transversal 121 en regard d'une surépaisseur 122 constituant un bandeau de renfort de l'extrémité arrière 124 de la plaque 116.

La plaque 116, qui s'étend au dessus de la partie avant de la carte C lorsque cette dernière est entièrement introduite, participe ainsi au maintien de la carte C dans le logement 90 pour éviter qu'elle s'échappe verticalement vers le haut et elle participe au guidage de la carte C en fin de son introduction.

Au voisinage de leurs extrémités arrière, les montants 78 et 80 sont élargis transversalement vers l'intérieur pour constituer deux paliers 126 et 128 qui reçoivent les tronçons 72 et 74 d'axe d'articulation.

A cet effet, chaque palier 126, 128 comporte un logement cylindrique complémentaire 130, 132 qui est ouvert radialement vers l'extérieur pour permettre un montage des tronçons 72 et 74 dans les paliers 126 et 128 par emboîtement élastique, et qui est renforcé par une joue latérale 131.

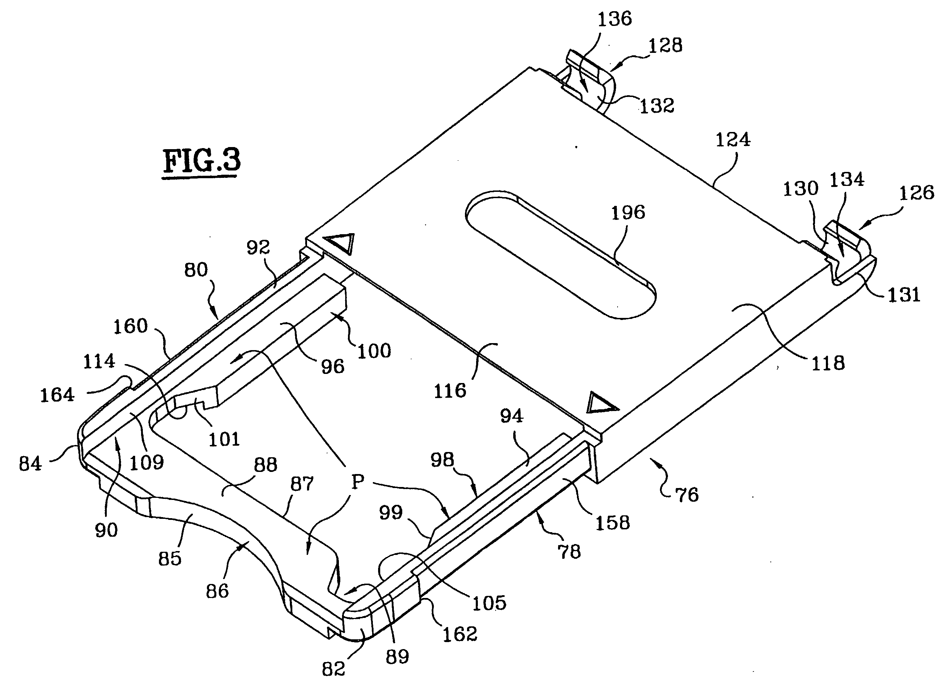

Comme on peut le voir par exemple à la figure 3, les fentes 134 et 136 d'introduction des tronçons 72 et 74 s'étendent radialement selon une direction perpendiculaire au plan du couvercle 76 et vers le haut.

Cet agencement est avantageux pour diverses raisons. Tout d'abord, la réalisation des tronçons 72 et 74 avec le socle 36 permet de les démouler aisément sans déformation du socle. L'orientation des logements 130, 132 et des fentes 134, 136 permet, par exemple en vue d'un remplacement du couvercle 76 alors que le socle 36 est soudé sur une plaque à circuit imprimé, le démontage du couvercle alors que celui-ci est dans une orientation sensiblement verticale, d'arrière en avant par traction d'arrière en avant. Ainsi, un endommagement des paliers 124 et 126 peut se produire lors du démontage mais il est sans conséquence grave dans la mesure où c'est le couvercle 76 qui est remplacé.

Pour la fabrication en série, l'assemblage des deux composants 36 et 76 peut être réalisé avec les deux composants "à plat" selon une même orientation, le socle reposant par sa face inférieure 50 sur un plan de montage tandis que le couvercle est alimenté lui aussi à plat, et pivoté de 180° par rapport à sa position finale fermée, au-dessus du socle, c'est-à-dire avec les fentes 134 et 136 orientées verticalement vers le bas au dessus des tronçons 72 et 74.

Le verrouillage du couvercle 76 sur le socle 36 en position fermée, qui correspond à la position de raccordement lorsque la carte C est présente, est assuré au moyen d'un verrou constitué par une barre de verrouillage 140.

La barre de verrouillage 140 est une plaque métallique mince qui s'étend transversalement au dessus de la face supérieure 92 de la partie de moitié avant des montants 78 et 80 du couvercle 76.

La partie centrale de la barre de verrouillage peut présenter une flèche vers le bas de manière que sa face interne inférieure 143 coopère par friction avec la portion en vis-à-vis de la face supérieure 33 de la carte pour constituer un frein de carte.

La partie supérieure en forme de plaque 142 de la barre de verrouillage 140 présente une épaisseur sensiblement égale à celle de la plaque 116 et elle s'étend au dessus du logement 90, et donc de la partie arrière de la carte C lorsque cette dernière est présente, participant ainsi au maintien de la carte C dans un logement.

La partie supérieure 142 est délimitée par deux bords transversaux avant 144 et arrière 146. La barre de verrouillage 140 est ici de préférence symétrique dans sa conception, notamment pour faciliter l'assemblage des composants de manière automatisée, et chaque bord 144, 146 présente un dégagement central 148, 150.

La barre de verrouillage 140 est montée coulissante longitudinalement sur le couvercle 76 et sa position extrême arrière est délimitée par la venue en butée du bord transversal arrière 146 en appui contre le bord transversal avant 152 de la plaque arrière 116.

Pour assurer le guidage en coulissement de la barre de verrouillage 140 sur le couvercle 76, la plaque supérieure 142 se prolonge verticalement vers le bas à ses deux extrémités opposées par deux joues latérales verticales 154 et 156 qui s'étendent le long des faces transversales externes d'orientation verticale 158 et 160 des deux moitiés avant amincies des montants 78 et 80. Ces deux portions amincies sont délimitées longitudinalement vers l'avant par deux épaulements 162 et 164 avec lesquels coopèrent respectivement les bords avant verticaux 166 et 168 des joues 154 et 156 pour définir la position extrême avant de la barre de verrouillage 140 sur le couvercle 76.

Au delà des joues 154 et 156, la plaque 142 se prolonge horizontalement vers l'intérieur par deux pattes horizontales et opposées 172, 174 de guidage et verrouillage qui s'étendent en vis-à-vis l'une de l'autre et dont chacune est délimitée transversalement par un bord longitudinal interne 176, 178.

Ainsi, chaque joue 154, 156 en association avec une patte 172, 174 constitue un couloir 180, 182 de guidage longitudinal de la barre de verrouillage 140 sur les montants 78 et 80 du couvercle 76.

Les pattes 172 et 174 sont reçues en coulissement le long des faces inférieures 112 et 114 des glissières 98 et 100.

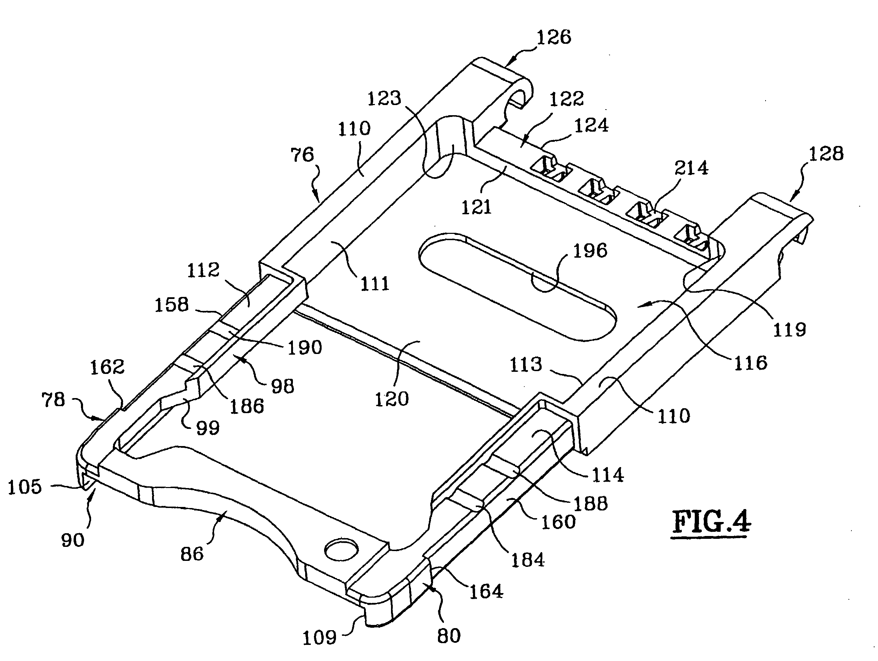

Comme on peut le voir sur la figure 4, ces faces 112 et 114 présentent chacune deux crans avant 184, 186 et arrière 188, 190 qui reçoivent, en fonction de la position extrême avant ou arrière de la barre de verrouillage 140, un ergot 192, 194 formé en relief vers l'intérieur dans les pattes 172 et 174. Cet agencement permet de retenir la barre de verrouillage dans l'une ou l'autre de ses deux positions extrêmes, tandis que le passage de l'une à l'autre nécessite d'appliquer à la barre de verrouillage 140 un effort de "franchissement" de la portion qui sépare les crans adjacents. Cet agencement procure aussi une sensation tactile et/ou auditive au verrouillage et au déverrouillage de la barre de verrouillage 140.

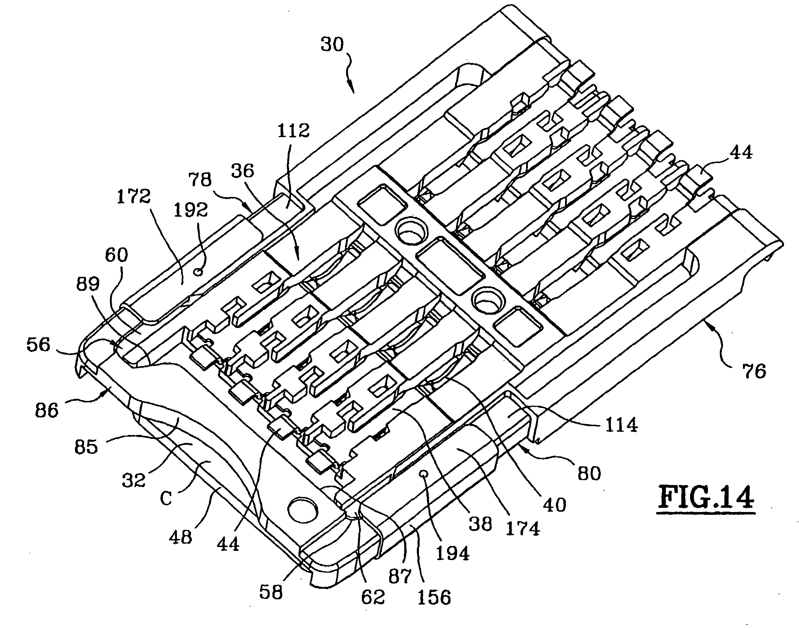

En position extrême avant verrouillée, et comme on peut le voir sur la figure 14, les extrémités longitudinales avant des pattes 172 et 174 s'étendent en regard des faces inférieures en vis-à-vis 60 et 62 des ergots 56 et 58 de verrouillage du socle 36 tandis que, en position extrême arrière de verrouillage, les ergots sont dégagés pour permettre l'ouverture du couvercle 76 par pivotement autour de l'axe X-X.

Les dégagements 148 et 150 en forme de découpes dans la plaque 142 de la barre de verrouillage 140 ont plusieurs fonctions. Ils permettent tout d'abord de manoeuvrer longitudinalement la barre de verrouillage 140 entre ses deux positions extrêmes avant et arrière à l'aide d'un ongle ou d'une pointe d'outil. Le dégagement arrière 150 permet, en l'absence de carte C, de contrôler les contacts 40 de la partie avant (figure 1), tandis que les contacts 40 de la partie arrière peuvent être contrôlés à travers une fenêtre 196 de la traverse 116.

Le dégagement avant 148 permet, comme on peut le voir à la figure 1, de souder les extrémités 44 de raccordement des contacts 38 de la partie avant du socle 36, même lorsque la barre de verrouillage 140 est en position extrême avant, c'est-à-dire dans sa position de verrouillage du couvercle 76 en position fermée dans laquelle il est généralement livré pour son montage sur la plaque à circuit imprimé.

Comme on peut le voir sur la figure 1, la zone centrale Z de la partie avant de la face supérieure 118 de la plaque 116 constitue une zone de préhension (pour la technique du "pick and place") du connecteur, cette zone Z étant sensiblement au droit du centre de gravité du connecteur 30.

Après cette opération de soudage en position fermée et verrouillée, l'utilisation de l'appareil équipé du connecteur 30 nécessite l'insertion d'une carte C en position de raccordement.

Pour ce faire, l'utilisateur déplace la barre de verrouillage 140 d'avant en arrière (de la figure 1 à la figure 2) et il peut ensuite faire pivoter le couvercle 76 par rapport au socle 36 en le soulevant pour dégager l'extrémité libre ouverte vers l'avant du logement 90.

Au cas où un obstacle, tel qu'un composant ou une paroi ou cloison s'étend devant le bord transversal avant du connecteur, le dégagement 85 permet de soulever le couvercle avec un ongle ou avec la pointe d'un outil.

Comme cela sera expliqué par la suite, le début de la course d'ouverture en pivotement du couvercle est de préférence assisté élastiquement, même en l'absence de carte C dans le connecteur.

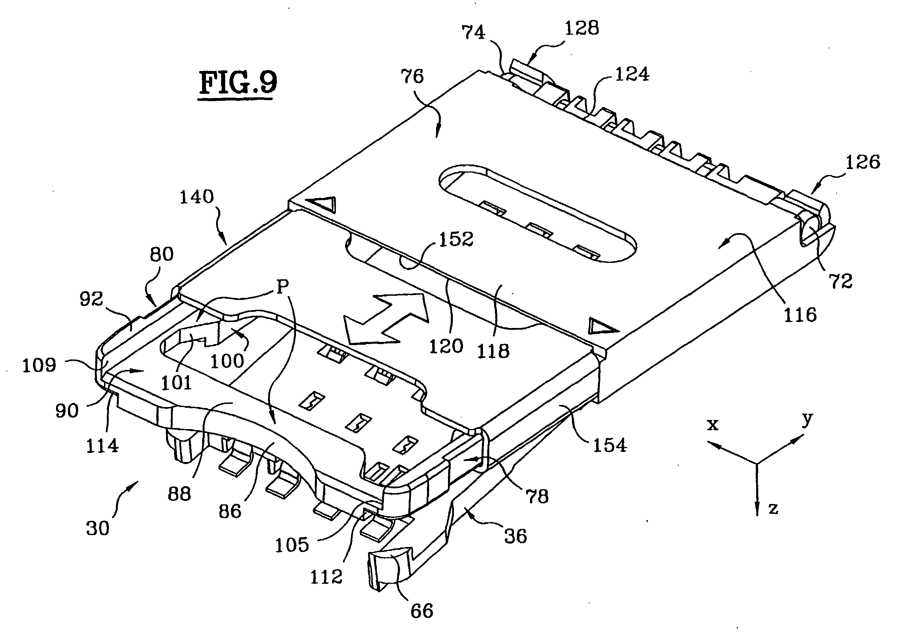

Du fait de l'aménagement du plan de pose P dans la face supérieure du couvercle 76, la carte C peut être mise en place très aisément avec un très faible angle d'ouverture (compris entre 10° et 15°) du couvercle 76 comme on peut notamment le voir aux figures 9 à 11, c'est à dire un angle permettant de ne pas être gêné par les composants ou cloisons environnants pour mettre la carte en place. L'ergonomie est telle qu'elle permet de réaliser la mise en place de la carte d'une seule main et en aveugle.

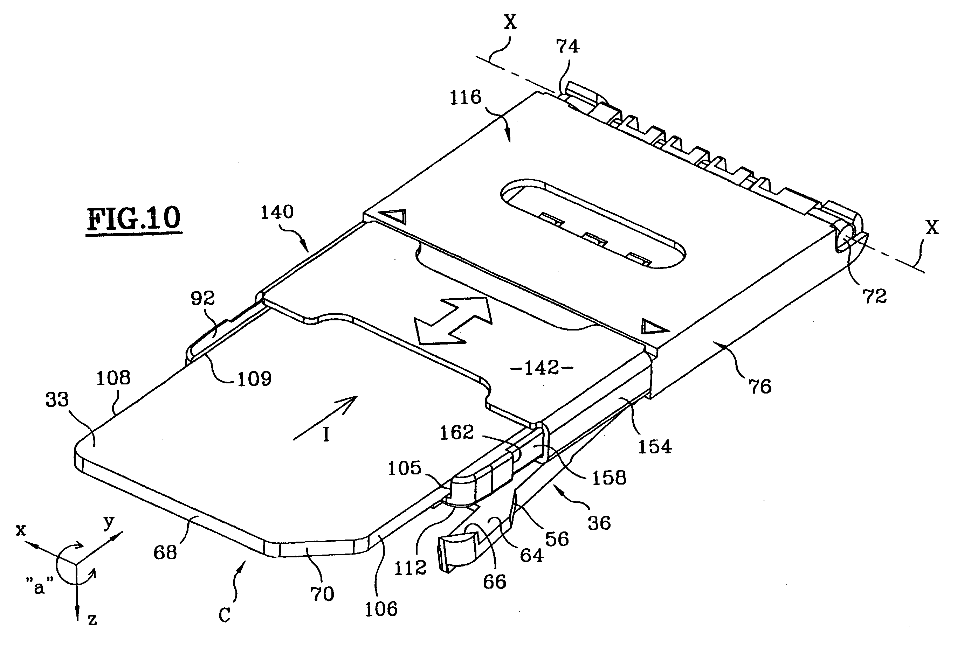

A cet égard on expliquera, en référence notamment aux figures 9 et 10, la cinématique et la chronologie de la mise en place d'une carte C.

La mise en place en vue de l'introduction commence par une première étape consistant à trouver la référence verticale par rapport au plan de pose P, en "z", c'est à dire une première étape au cours de laquelle on met en appui vertical, sur la face supérieure 88 du barreau 86, l'arête inférieure du bord transversal avant 117 de la carte C ou bien même seulement l'un des deux angles arrondis avant de la carte. Cette première opération ne nécessite pas que la carte soit correctement orientée, c'est à dire que son axe longitudinal soit parallèle à l'axe longitudinal, en "y", du couvercle.

La deuxième étape consiste à faire glisser latéralement, en "x", la carte (vers la gauche ou la droite) de manière à amener l'un de ses bords longitudinaux 106 ou 108 en appui transversal contre la facette correspondante en vis-à-vis 105 ou 109 du couvercle.

La troisième étape consiste à, si nécessaire, orienter angulairement la carte dans son plan pour corriger l'angle "a" correspondant au défaut d'alignement angulaire de l'axe "y" de la carte. Cette correction est obtenue par pivotement autour de l'axe vertical "z".

L'étape suivante consiste à engager ou introduire la carte C selon la direction longitudinale I d'introduction. Ce mouvement d'introduction s'effectue dans un canal ou couloir de guidage qui est délimité par la face interne inférieure 143 de la plaque 142 de verrouillage, par les facettes 105 et 109 par les glissières 94 et 96, pour la première partie de la course d'engagement, puis par la face interne 120 de la plaque transversale arrière 116 et par les prolongements arrière 111 et 113 des facettes 105 et 109.

La fin de l'étape d'engagement longitudinal en "y" selon la direction I, se termine par la venue en butée du bord transversal avant 117 de la carte C contre le bord transversal 121 de la surépaisseur 122 du couvercle 76.

Au cours de cette partie arrière de la course d'engagement de la carte C, il n'existe pas de guidage inférieur dans la mesure où les glissières ne sont présentent que le long de la moitié avant des montants 78 et 80. Il ne se produit toutefois pas de phénomène d'introduction excessive de la carte au-delà de la butée 121, comme dans le cas des connecteurs selon l'état de la technique car la conception du connecteur 30 et de son couvercle 76 permet de disposer d'une surépaisseur 122 de grande hauteur procurant une surface de butée d'une hauteur d'environ 2 mm en regard des deux coins avant arrondis de la carte C. Ceci résulte de la conception du couvercle 76 qui, en position fermée, entoure le socle 36 avec les parties arrière des montants comportant des arrondis concaves 119 et 123 dont la hauteur est sensiblement égale à 2 mm, tandis que la hauteur de la butée 121 ne peut pas être supérieure à celle de la carte soit environ 0,8 mm.

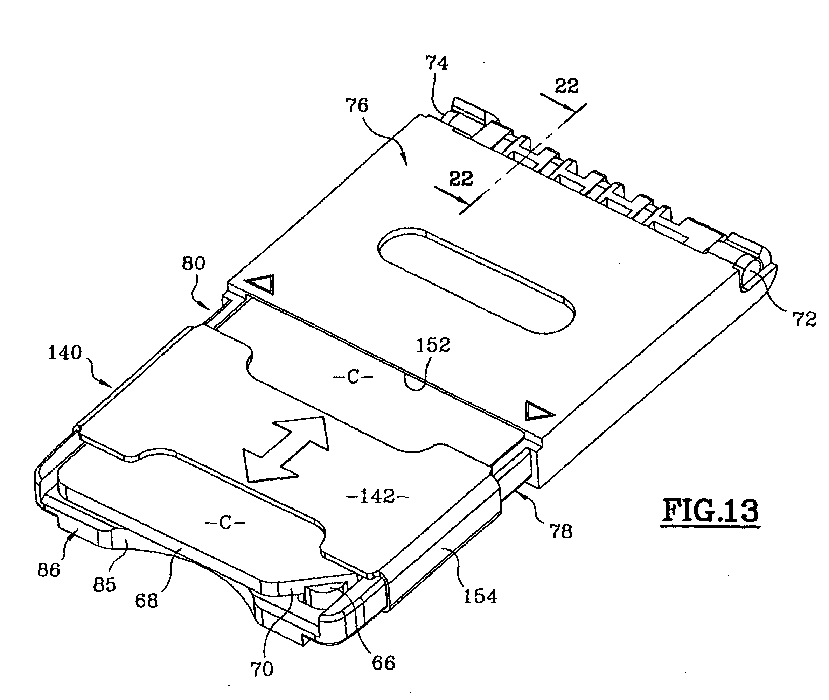

Dans la position introduite de la carte, il est possible de fermer et de verrouiller à nouveau le couvercle 76 sur le socle 36 si la carte a été introduite dans le bon sens car le doigt 66 s'étend en regard du pan coupé 70 (figure 13), le verrouillage étant assuré en ramenant la barre de verrouillage 140 vers sa position extrême avant. En cas d'erreur de sens de mise en place de la carte C, le verrouillage est impossible et le couvercle est rappelé élastiquement en position ouverte.

En position fermée (figures 13 et 14), le couvercle 76 qui porte la carte C et le verrou 140 est entièrement autour et au dessus du socle 36 qu'il protège, la barre de verrouillage métallique 140 assurant de plus un "blindage" de la carte C.

Dans certains cas, la présence du verrou métallique 140 peut, en position fermée du couvercle, être gênante et risquer de provoquer des courts-circuits avec des composants placés à proximité du connecteur 30.

Pour éviter ce phénomène, il est par exemple possible de réaliser le verrou 140 moulé en matière plastique isolante. Selon une autre solution, il peut être entièrement revêtu d'une couche de faible épaisseur de matériau isolant, ou au moins ses surfaces d'enveloppe externe 142, 154, 156, 172 et 174.

Une autre conception consiste à "évacuer" les charges électrostatiques nuisibles, préalablement emmagasinées par la plaque isolante que constitue la carte C, avant d'établir le contact électrique entre les plages 34 de la carte C et les éléments de contact 38 grâce à la combinaison des éléments suivants:
- la plaque de verrouillage métallique 140 dont la face interne 143 et les faces internes des ergots 192 et 194 (en appui contre les crans 112 et 114 du couvercle 76) sont électriquement conductrices (une légère flèche de la plaque 142 du verrou pouvant améliorer le contact entre la face supérieure 33 de la carte C et le verrou 140) ;
- une métallisation complémentaire partielle du couvercle 76 moulé en matière plastique dans les zones 112 et 114 (y compris 186, 190, 184 et 188), 98, 99,100, 101, les prolongements arrière 111 et 113 des facettes 105 et 109, 120, 121 localement, au moins un appui 214 correspondant à l'un des contacts 38 ("contact de masse")qui est relié au circuit de masse du schéma électrique ou à un des contacts 38 qui n'est pas utilisé par la puce de la carte C ;
- la lame ressort 206 du contact arrière "de masse", ou du contact du connecteur qui n'est pas relié à la puce de la carte mais qui est lui même relié au circuit de masse de la plaque à circuit imprimé par le soudage ou brasage de l'extrémité 44 de raccordement.

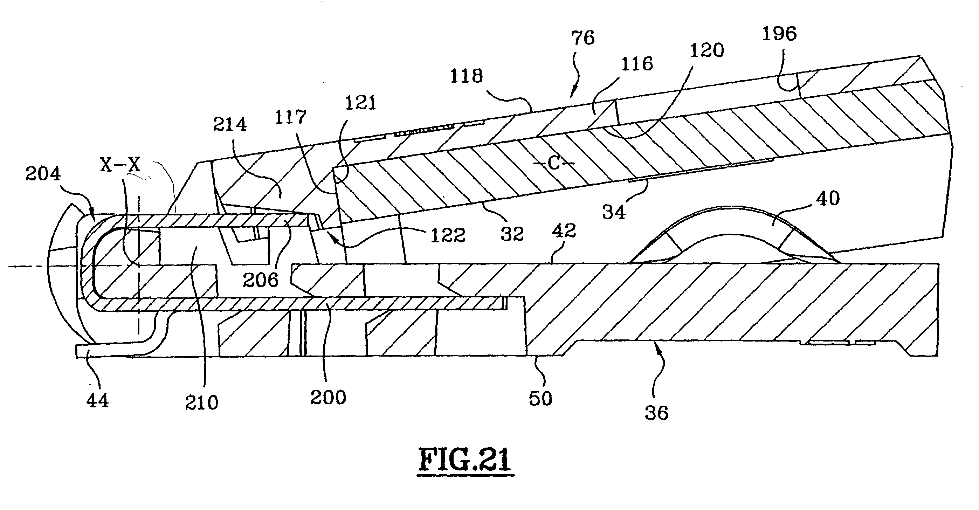

Une telle conception a pour avantage, comme on peut le voir à la figure 21, de garantir que la décharge se produit de préférence avant l'établissement du contact, c'est à dire avant la coopération des plages 34 avec les extrémités 40 des contacts 38.

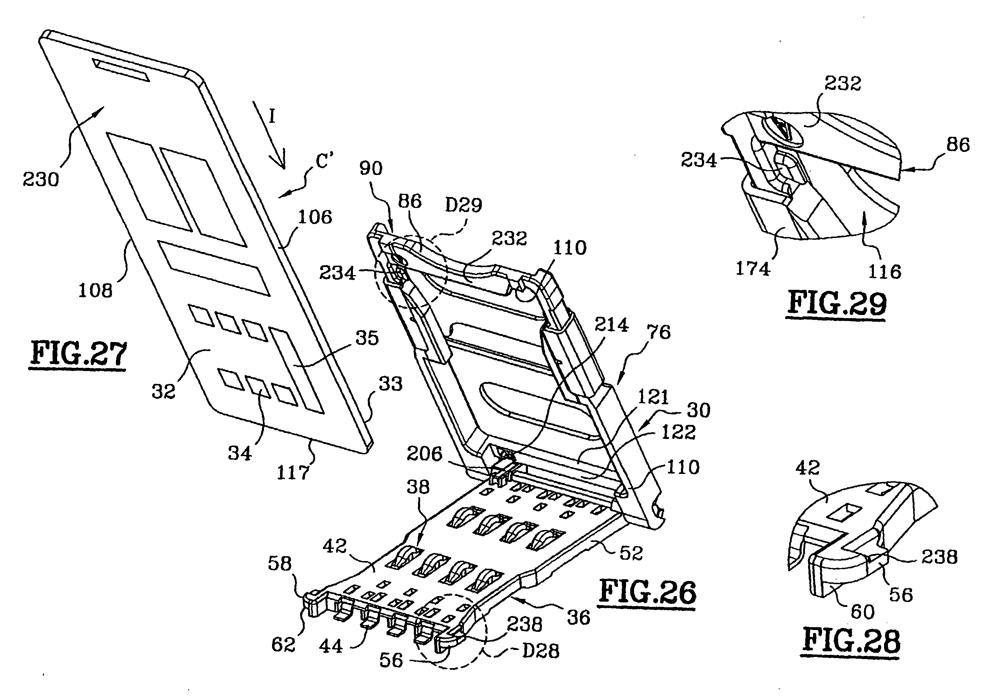

En l'absence d'un doigt 66, et comme on peut le voir notamment à la figure 26, l'entrée avant du logement 90 est entièrement dégagée et il est alors possible de mettre dans le couvercle 76 une carte « spéciale MICROSIM » C' de plus grande longueur qui s'étend vers l'avant à l'extérieur du connecteur 30 et dont la partie saillante 230 peut être plus épaisse (verticalement vers le bas et vers le haut) et porter des composants électroniques. Un exemple d'une telle carte C' est par exemple une carte « NexFLASH Media-stick » commercialisée par la Société Nexcom Technology Inc, cette carte comportant par exemple un microprocesseur.

Du fait de la suppression du doigt 66, les deux ergots 56 et 58 sont de longueurs égales.

Il n'est par contre pas nécessaire de modifier la partie correspondante du couvercle, un même couvercle 76 pouvant être utilisé avec un socle 36 comportant ou non un doigt 66 de détrompage.

Comme on peut le voir à la figure 27, l'une des plages parallèles de raccordement électrique orientées longitudinalement de la face inférieure 32 de la carte C' est une plage 35 de plus grande longueur qui est prévue pour raccorder électriquement et simultanément deux lames de contact alignées 38 pour constituer un commutateur de détection de la présence de la carte en position de lecture/écriture lorsque le couvercle 76 est fermé et verrouillé.

Ainsi, sans modifier le socle porte-contacts 36, on dispose d'un commutateur qui ne nécessite de faire appel à aucun composant supplémentaire mais qui résulte d'une simple modification des plages 34 de la carte MICROSIM.

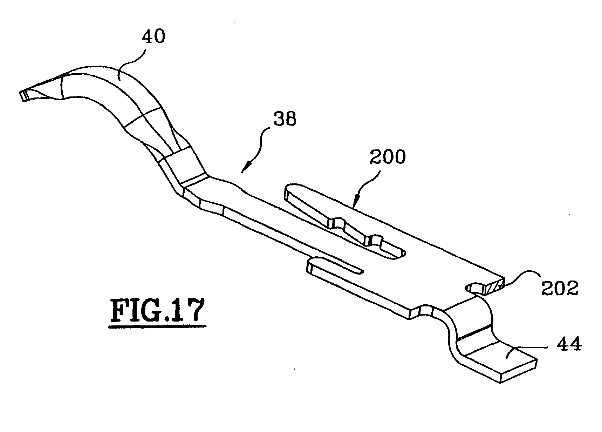

On a représenté sur la figure 17 une lame de contact électrique de structure connue qui est montée dans le socle 36 par insertion longitudinale d'une patte latérale 200 qui est conformée en harpon pour être insérée longitudinalement dans un logement correspondant de l'isolant du socle 36. Des lames classiques équipent la partie avant du connecteur.

Les lames sont fabriquées par groupe de lames adjacentes qui sont à l'origine reliées entre elles par des barrettes ou rives de liaison et elles sont ensuite séparées par sectionnement des rives qui s'étendent à l'origine depuis le bord arrière 202 du harpon 200.

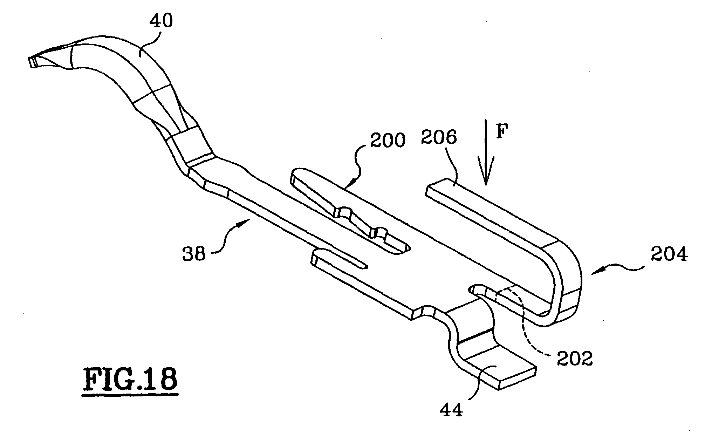

On a représenté sur la figure 18 une variante d'une des lames de contact 38 qui équipe la partie arrière du connecteur 30. Comme on le voit sur cette figure, la rive 204 n'a pas été sectionnée et elle est repliée à 180° au dessus de la partie arrière du harpon 200 de manière que son extrémité libre 206 s'étende horizontalement vers l'avant de manière à constituer une poutre susceptible de fléchir élastiquement selon la direction de la flèche F.

Cette poutre constitue un ressort qui participe à l'effet d'ouverture automatique du couvercle après son déverrouillage.

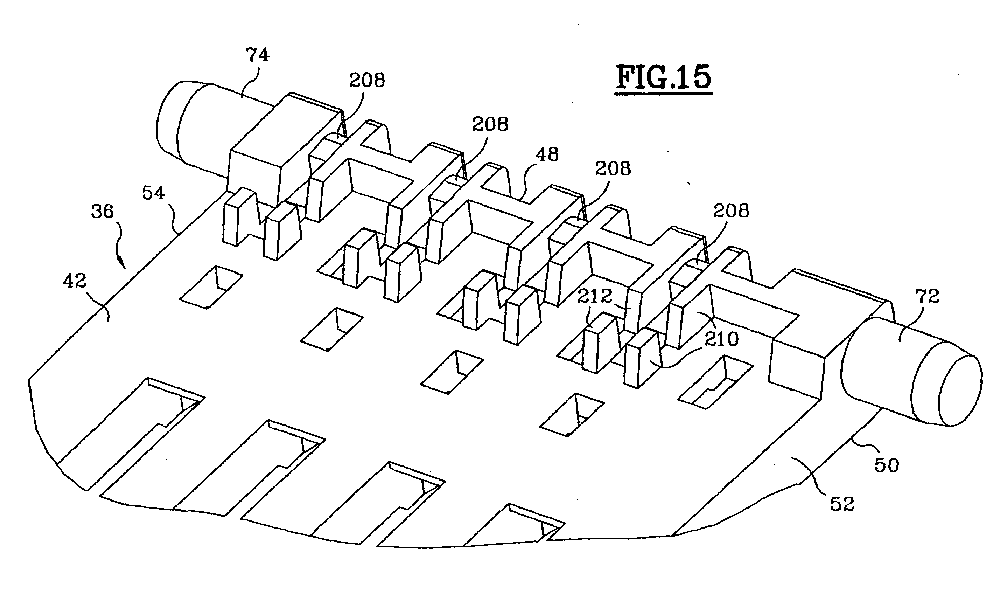

Comme on peut le voir aux figures 15 et 16 et 18 et 19, chacune des poutres est repliée autour d'une portion arrière de forme complémentaire 208 de la partie arrière du socle 36. Chaque lame formant poutre 206 s'étend entre deux ailes parallèles 210 et 212 formées en saillie au dessus de la face supérieure 42 et qui s'étendent vers l'avant. Les ailes 210 et 212 guident les ressorts 206 et les protègent à leurs extrémités libres et latéralement.

Dans l'exemple illustré sur les figures, les quatre lames 38 de la partie arrière comportant chacune une lame-ressort 206 dont chacune coopère avec un poussoir correspondant 214 formé en vis-à-vis dans la partie 122 de l'arrière du couvercle 76. Chaque poussoir 214 est agencé dans un logement 216 qui reçoit les parties avant des ailes 210 et 212 correspondantes.

Ces moyens de rappel élastique sont "gratuits", c'est à dire qu'ils ne font appel à aucun composant supplémentaire et ne nécessitent pas non plus de modification des éléments 38 de contact électrique.

L'invention n'est toutefois pas limitée au mode de réalisation illustrée selon lequel ces lames sont réalisées venues de matière avec les lames de contact 38. Il est en effet possible de les réaliser indépendamment, ces lames de rappel élastiques étant toujours de préférence protégées par les joues 210 et 212.

Les ailes 210 et 212 se prolongent aussi vers l'arrière au delà du bord transversal arrière du socle et elles constituent des cloisons intermédiaires entre les parties arrière des contacts 38 qui sont isolées les unes des autres pour éviter des courts-circuits notamment en cas de saletés qui risqueraient de pénétrer dans I partie arrière du connecteur.

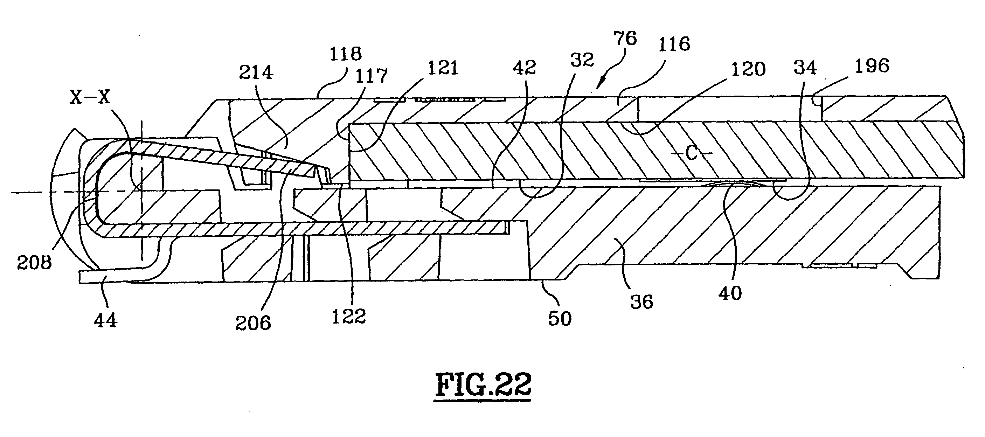

Comme on peut le voir sur la figure 22, en position fermée du couvercle 76, chaque lame-ressort 206 est fléchie et précontrainte élastiquement et procure un effet de rappel élastique vers l'ouverture qui permet d'obtenir une ouverture automatique du couvercle avec un angle déterminé et contrôlé (d'environ 15°). La valeur de cet angle d'ouverture est telle qu'il n'y a pas de frottement de la face inférieure 32 de la carte sur les extrémités 40 des contacts 387 lors de l'introduction de la carte C dans le couvercle 76. De plus, du fait de l'agencement des ressorts 206 à proximité de l'axe X-X, le rappel élastique se produit sans élan et le couvercle ne va pas au-delà de son angle contrôlé d'ouverture.

Dans ce mode de réalisation, il n'existe aucune liaison mécanique positive entre les lames 206 formant ressort et le couvercle, et elles ne gênent donc en aucune manière les autres manipulations du couvercle, notamment en vue de son ouverture selon un angle d'ouverture plus important, ou lors de son assemblage ou de son remplacement.

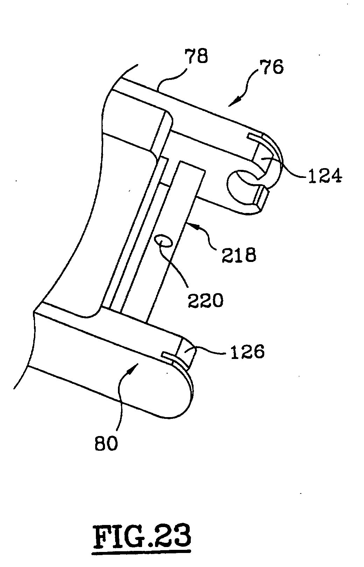

Dans la variante de la figure 23, les moyens de rappel élastique à l'ouverture sont constitués par une poutre transversale 218 qui relie transversalement les montants 78 et 80 au niveau de paliers 124 et 126.

La face inférieure de la poutre transversale 218 comporte un poussoir 220 en relief qui, en position fermée du couvercle 76, coopère avec une portion en vis-à-vis du socle 36 pour faire fléchir élastiquement la poutre 218.

Dans ce cas, il n'existe pas non plus de liaison mécanique positive entre la poutre 218 formant ressort et le socle, et elle ne gêne donc en aucune manière les autres manipulations du couvercle, notamment en vue de son ouverture selon un angle d'ouverture plus important, ou lors de son assemblage ou de son remplacement

La poutre renforce encore la résistance de la partie arrière du couvercle qui lui permet de résister notamment aux risques de déformation à chaud lors des opérations de soudage ou de brasage par refusion.

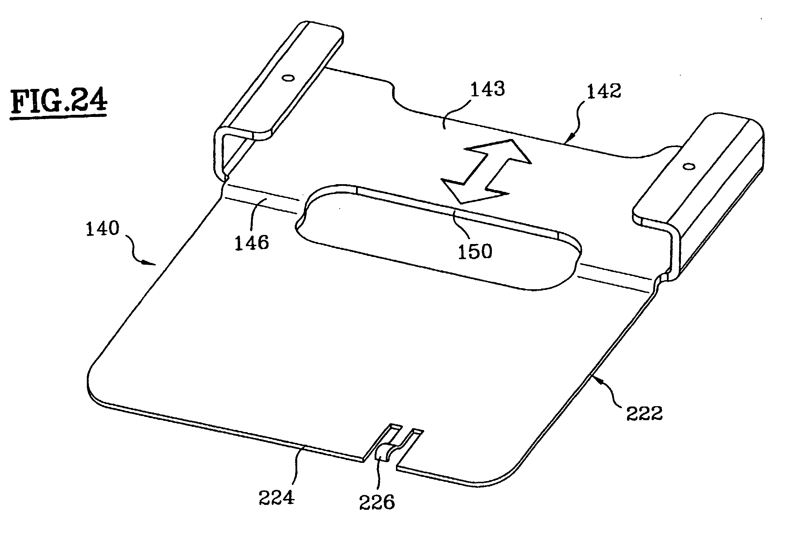

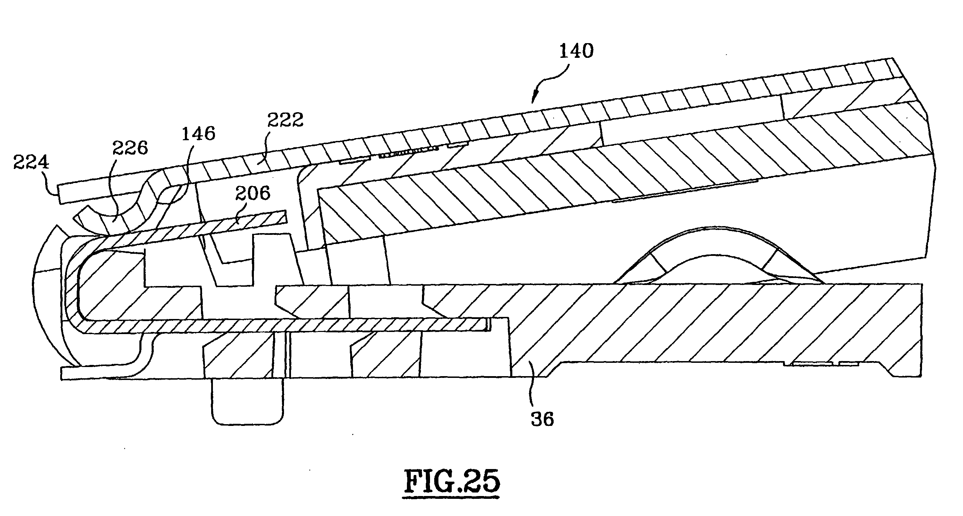

Dans la variante illustrée aux figures 24 et 25, le verrou métallique 140 se prolonge vers l'arrière par un prolongement 222, dont le plan est décalé vers le haut par rapport à la plaque et dont le bord transversal arrière 224 comporte une patte 226 décalée vers le bas qui coopère avec la lame 206 du contact arrière sélectionné pour évacuer les charges électrostatiques vers le plan de masse du circuit imprimé, et ceci dés le début de l'introduction de la carte C dans le couvercle 76. En position fermée et connectée de la carte, le prolongement 222 améliore aussi le blindage du connecteur.

Selon cette variante, il n'est pas nécessaire de métalliser partiellement le couvercle 76 comme évoqué précédemment.

On décrira maintenant des détails de la variante de réalisation illustrée aux figures 26, 28 et 29.

On constate tout d'abord que la face inférieure horizontale plane 232 du barreau 86 est évidée, c'est à dire qu'elle est décalée verticalement vers le haut par rapport au plan général de la face inférieure 110, et ceci pour réduire la surface d'appui du couvercle sur la face supérieure de la plaque à circuit imprimé qui reçoit le connecteur.

Afin d'éviter l'écrasement du connecteur en l'absence de carte et notamment lors des opérations de soudage, il est prévu des pattes 234 agencées transversalement vers l'intérieur et de manière symétrique dans le couvercle, à proximité des zones 99 et 101. Les faces inférieures de ces pattes sont prévues pour venir en appui vertical sur les faces supérieures de pattes 238 agencées en vis-à-vis sur le socle 36 et qui sont agencées transversalement vers l'extérieure de manière symétrique à proximité des ergots 56 et 58.

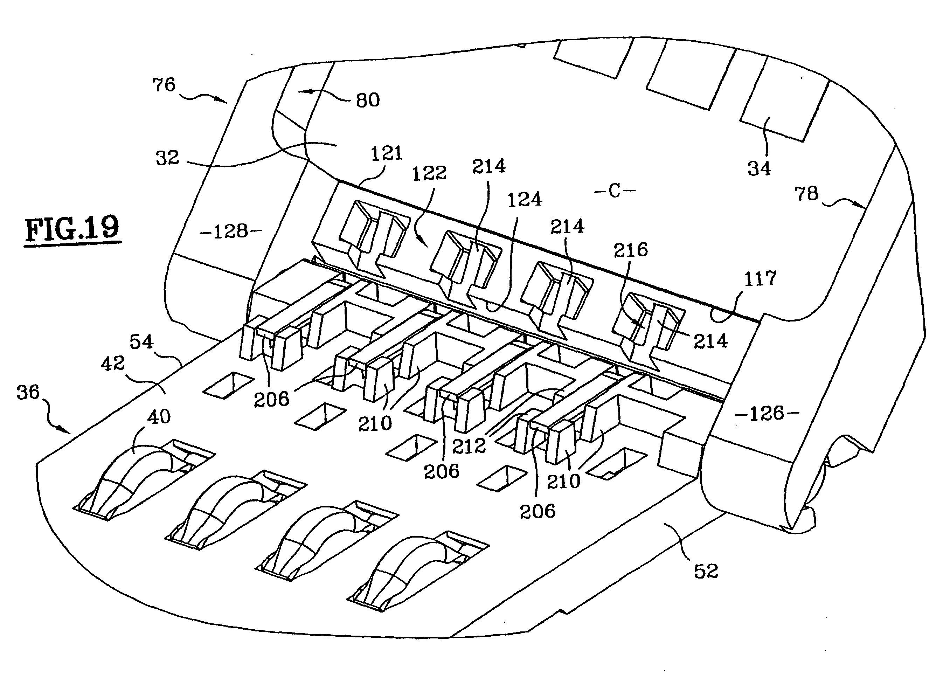

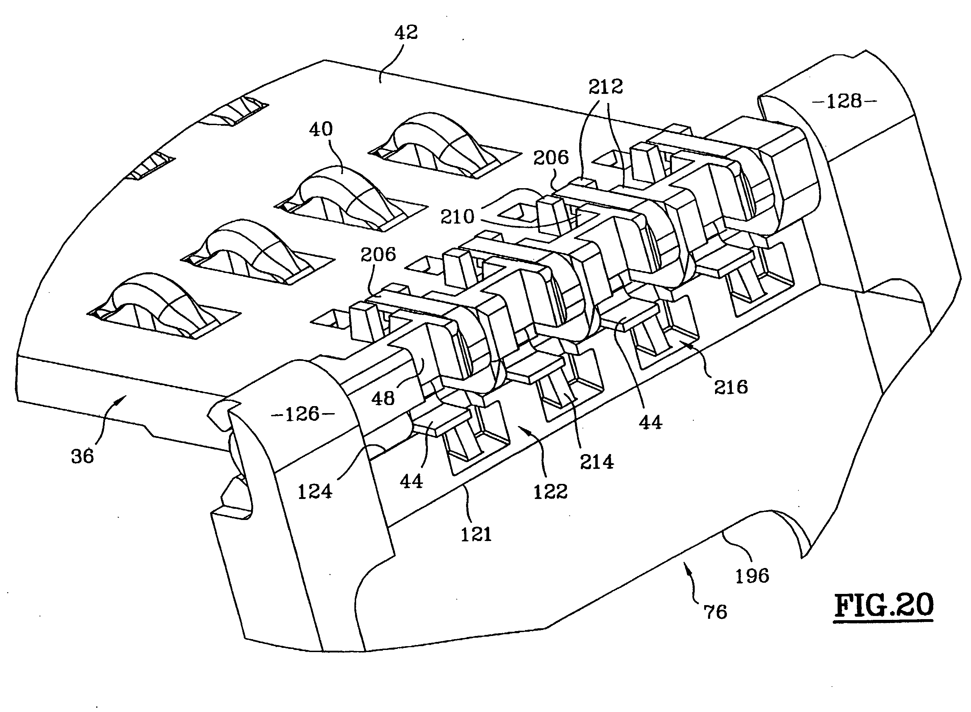

La partie arrière du connecteur 30 est simplifiée et plus particulièrement la partie arrière du socle 36, notamment si on la compare à celle illustrée aux figures 19 et 20.

En effet, il n'est prévu qu'une seule lame de contact 38 modifiée pour comporter une lame formant poutre 206 et un seul poussoir correspondant 214 est formé dans la partie arrière du couvercle 76.

La conception selon l'invention permet de réduire notablement l'encombrement du connecteur si on le compare au connecteur selon l'état de la technique commercialisé par la division CANNON de la société ITT COMPOSANTS ET INSRUMENTS sous la référence CCM03-0. Pour une épaisseur de carte d'environ 0,80 mm, l'épaisseur du connecteur est réduite de 3 à 2, 5 mm, sa longueur de 30,5 à 29, 6 mm et sa largeur de 20,5 à 17,2 mm.

L'ergonomie globale est optimisée dans la mesure où le plan de pose P, en association avec un pré-guidage latérale constitue un site d'accueil de la carte en tout début de sa mise en place en vue de son introduction dans le logement 90.

Sans sortir du cadre de l'invention, et à titres de variantes :
- le connecteur peut comporter un commutateur de détection de la présence de la carte ;
- il est possible d'inverser les sens de verrouillage et de déverrouillage du verrou, sans modifier la conception du verrou mais en "déplaçant" les ergots 56 et 58 vers le centre du socle ;
- les contacts peuvent être du type à piquer.

## Revendications

1. Connecteur (30) pour le raccordement électrique d'une carte à circuit intégré (C) dont une face inférieure (32) comporte des plages (34) de raccordement,
- du type comportant un socle inférieur (36) en forme de plaque en matériau isolant formant support pour des éléments de contact électrique (38) dont des extrémités libres de contact (40) font saillie au delà du plan de la face supérieure (42) du socle (36),
- du type comportant un couvercle supérieur (76) qui comporte dans l'une de ses faces opposées (92) un logement (90) qui reçoit au moins partiellement la carte (C) qui est introduite dans le logement longitudinalement d'avant en arrière, selon une direction (I) parallèle à son plan général et à celui du couvercle (76),
- du type dans lequel le couvercle (76) est monté pivotant par rapport au socle (36), autour d'un axe transversal d'articulation (X-X) situé au voisinage des extrémités longitudinales arrière en vis-à-vis du socle (36) et du couvercle (76), entre une position ouverte et une position fermée de contact dans laquelle le couvercle (76) est sensiblement parallèle au socle (36) et les plages (34) de raccordement de la carte coopèrent avec les extrémités (40) de contact des éléments (38) de contact du socle (36),
- du type comportant une barre transversale (140) de verrouillage du couvercle (76) en position fermée qui s'étend au dessus de la face supérieure (92) du couvercle (76) sur lequel elle est montée coulissante longitudinalement entre une position extrême verrouillée et une position extrême déverrouillée, et
- du type dans lequel une (32) des faces opposées (32, 33) de la carte (C) est en appui contre le fond (P) du logement tandis que la barre mobile de verrouillage (140) coopère avec une portion de l'autre face de la carte (C) pour maintenir cette dernière dans le logement (90),
**caractérisé en ce que** le logement (90) est formé dans la face supérieure (92) du couvercle (76), et **en ce que** la face inférieure (32) de la carte est en appui contre le fond du logement qui est évidé au moins partiellement de manière à dégager la partie de la face inférieure (32) de la carte (C) en regard des plages (34) de raccordement.

2. Connecteur selon la revendication 1, **caractérisé en ce que** la barre mobile de verrouillage (140) est montée coulissante sur le couvercle (76) entre une position extrême avant verrouillée et une position extrême arrière déverrouillée.

3. Connecteur selon l'une des revendications 1 ou 2, **caractérisé en ce que** le couvercle (76) comporte deux montants latéraux parallèles (78, 80) dont les faces transversales internes en vis-à-vis (105, 109) délimitent latéralement le logement (90) de la carte, qui est ouvert longitudinalement vers l'avant, et qui sont reliés par au moins une traverse de liaison (86, 116).

4. Connecteur selon la revendication 3, **caractérisé en ce que** une plate-forme de pose de la carte (C) en forme de barreau (86) est agencée au voisinage des extrémités libres avant (82, 84) des montants (78, 80) et sa face supérieure (88) définit un plan (P) de pose de la face inférieure (32) de la carte (C).

5. Connecteur selon la revendication 4, **caractérisé en ce que** chacun des deux montants latéraux (78, 80) comporte une glissière (98, 100) délimitant le fond du logement (90) coplanaire avec la face supérieure (88) du barreau (86), et **en ce que** la carte est en appui contre les glissières (94, 96) par les bords parallèles longitudinaux de sa face inférieure (32).

6. Connecteur selon la revendication 4 ou 5, **caractérisé en ce que** les glissières (98, 100) s'étendent longitudinalement sensiblement sur la moitié avant de la longueur des montants latéraux, et **en ce que** la traverse de liaison (116) est une plaque transversale supérieure qui s'étend au dessus d'une partie avant de la face supérieure (33) de la carte (C) et sensiblement sur la moitié arrière de la longueur des montants latéraux (78, 80).

7. Connecteur selon l'une quelconque des revendications 3 à 6, **caractérisé en ce que** la barre mobile de verrouillage (140) est une plaque transversale (142) qui est montée coulissante au dessus des montants latéraux, et **en ce que** ses extrémités transversales opposées sont repliées verticalement (154, 156) le long des faces transversales externes (158, 160) des montants latéraux (78, 80), puis transversalement vers l'intérieur sous la forme de deux pattes de manière à délimiter deux couloirs (180, 182) de guidage et de retenue de la plaque de verrouillage (142) sur le couvercle (76).

8. Connecteur selon la revendication 7, **caractérisé en ce que** les deux pattes d'extrémités (172, 174) de la plaque de verrouillage sont repliées sous les faces inférieures (112, 114) des glissières (98, 100).

9. Connecteur selon la revendication 8 prise en combinaison avec la revendication 2, **caractérisé en ce que** la longueur longitudinale des pattes d'extrémités (172, 174) de la plaque de verrouillage (142) est telle que, en position extrême avant verrouillée, elles s'étendent longitudinalement vers l'avant au delà des glissières (98, 100) pour constituer deux couloirs de verrouillage dans lesquels sont reçus des ergots correspondants (56, 58) du socle (36) qui font saillie transversalement vers l'extérieur à partir des deux bords parallèles longitudinaux (52, 54) du socle qui, en position fermée, sont reçus entre les bords parallèles longitudinaux et opposés des extrémités en vis-à-vis des glissières.

10. Connecteur selon l'une quelconque des revendications 7 à 9 prise en combinaison avec la revendication 5, **caractérisé en ce que** l'épaisseur de la plaque de verrouillage (142) est sensiblement égale à l'épaisseur de la traverse arrière de liaison en forme de plaque (116), et **en ce que** le bord transversal avant (152) de cette dernière délimite une butée contre laquelle la plaque de verrouillage (142) vient en appui longitudinal par son bord transversal arrière (144) pour définir sa position extrême arrière déverrouillée.

11. Connecteur selon l'une quelconque des revendications 3 à 10, **caractérisé en ce que** l'épaisseur du socle (36) entre ses faces parallèles, inférieure (50) et supérieure (42), et la hauteur des montants latéraux (78, 80) sont telles que, en position fermée du couvercle (76), le socle (36) et la carte (C) sont entourés latéralement par les montants latéraux.

12. Connecteur selon l'une quelconque des revendications précédentes, **caractérisé en ce que** des moyens d'articulation du couvercle (76) sur le socle (36) sont constitués par deux tronçons (72, 74) d'axe d'articulation, qui s'étendent transversalement vers l'extérieur chacun depuis l'un des deux bords parallèles longitudinaux (52, 54) du socle (36), et par deux logements cylindriques complémentaires (130, 132) dont chacun est formé à l'extrémité libre arrière (126, 128) de l'un des montants latéraux (78, 80) du couvercle.

13. Connecteur selon la revendication précédente, **caractérisé en ce que** les logements cylindriques sont ouverts radialement selon une direction sensiblement perpendicufaire à la face supérieure (92) de la partie avant du couvercle (76) et en direction de cette dernière pour permettre le montage des tronçons d'axe (72, 74) dans les logements (130, 132) par emboîtement élastique selon ladite direction radiale.

14. Connecteur selon l'une quelconque des revendications précédentes, **caractérisé en ce qu'**il comporte des moyens élastiques (206, 218, 220) qui sollicitent en permanence le couvercle (76), par rapport au socle (36), vers sa position ouverte.

15. Connecteur selon la revendication précédente, **caractérisé en ce que** lesdits moyens élastiques agissent entre le couvercle (76) et le socle (36) et sont agencés entre des portions en vis-à-vis de la face inférieure du couvercle et de la face supérieure du socle au voisinage des extrémités longitudinales arrière de ces deux éléments.

16. Connecteur électrique selon la revendication 14 ou 15, **caractérisé en ce que** les moyens élastiques sont agencés longitudinalement entre le bord transversal avant de la carte et le bord transversal arrière du connecteur.

17. Connecteur selon la revendication 15, **caractérisé en ce que** lesdits moyens élastiques sont constitués par au moins une patte (206) formant ressort qui est repliée pour s'étendre en porte-à-faux entre la face supérieure (42) de la partie arrière du socle (36) et une portion en vis-à-vis (214) de la partie arrière de la face inférieure du couvercle (76).

18. Connecteur selon l'une quelconque des revendications précédentes, **caractérisé en ce que** les éléments de contact électrique sont constitués par des lames (206) de contact déformables élastiquement qui s'étendent parallèlement à la direction longitudinale d'introduction (1) de la carte (C) et dont chacune se termine par une extrémité libre de raccordement qui s'étend longitudinalement au niveau d'un bord (208) transversal d'extrémité du socle (36).

19. Connecteur selon la revendication précédente prise en combinaison avec la revendication 17, **caractérisé en ce que** ladite patte (206) est réalisée venue de matière avec une extrémité de raccordement (44) d'une lame (38) de contact électrique.

20. Connecteur selon l'une des revendications 17 ou 19, **caractérisé en ce que** chacune desdites pattes (206) est protégée latéralement par des ailes (210, 212) réalisées venues de matière avec le socle (36).

21. Connecteur selon la revendication 14, **caractérisé en ce que** lesdits moyens élastiques comportent au moins un élément déformable élastiquement (218, 220) réalisé venu de matière plastique par moulage avec le couvercle (76).

22. Connecteur selon l'une quelconque des revendications précédentes, **caractérisé en ce que** la face supérieure (42) du socle (36) comporte, au voisinage de son bord transversal d'extrémité avant, un doigt (66) d'indexation en relief qui s'étend en regard d'un pan coupé (70) du bord transversal arrière (68) de la carte (C).

23. Connecteur selon l'une quelconque des revendications 7 à 10, **caractérisé en ce que** la partie centrale de la barre de verrouillage présente une flèche vers le bas de manière que sa face interne inférieure (143) coopère par friction avec la portion en vis-à-vis de la face supérieure (33) de la carte pour constituer un frein de carte.

24. Connecteur selon la revendication 6 prise en combinaison avec l'une quelconque des revendications 7 à 10, **caractérisé en ce que** la plaque formant traverse de liaison (116) et la plaque (142) formant barre de verrouillage comportent des ouvertures ou dégagements (196, 150) permettant un test des éléments (38) de contact électrique en l'absence de carte (C)

25. Connecteur électrique selon la revendication 3, **caractérisé en ce que**, en position introduite de la carte, les coins opposés du bord transversal avant (117) de la carte (C) coopèrent avec des zones de butée (119,123) de forme complémentaire agencées aux extrémités arrière des montants et dont la hauteur est nettement supérieure à l'épaisseur de la carte.

26. Connecteur selon l'une quelconque des revendications précédentes, **caractérisé en ce qu'**il comporte des moyens de liaison électrique au plan de masse du circuit imprimé d'une plaque qui porte le socle pour évacuer les charges électrostatiques de la carte (C).

27. Connecteur selon l'une quelconque des revendications précédentes, **caractérisé en ce que** l'entrée avant du logement (90) d'introduction de la carte (C) est entièrement dégagée de manière que le connecteur puisse recevoir une carte qui fait saillie à l'extérieur du connecteur et dont la portion en saillie est d'épaisseur supérieure à la partie reçue dans le logement.

## Patentansprüche

1. Elektrischer Verbinder (30) für eine Kontaktkarte (C) mit integrierten Schaltungen, deren Unterseite (32) Bereiche (34) für den Anschluss aufweist;
- der einen unteren Sockel (36) in Form einer Platte aus Isoliermaterial, welche die Tragfläche für elektrische Kontaktelemente (38) bildet, deren freie Kontaktenden (40) aus der Ebene der Oberfläche (42) des Sockels (36) herausstehen;
- der einen oberen Deckel (76) aufweist, der wiederum auf einer seiner gegenüber liegenden Seiten (92) eine Führung (90) aufweist, die wenigstens zum Teil die Karte (C) aufnimmt, die der Länge nach von vorne nach hinten in die Führung eingesetzt wird, und zwar in paralleler Richtung (I) zu ihrer allgemeinen Ebene und zur Ebene des Deckels (76);
- wobei der Deckel (76) im Verhältnis zum Sockel (36) zwischen einer geöffneten und einer geschlossenen Kontaktposition, in welcher der Deckel (76) deutlich parallel zum Sockel (36) liegt und die Anschlußbereiche (34) der Karte mit den Kontaktenden (40) der Kontaktelemente (38) des Sockels (36) zusammen arbeiten schwenkbar auf einer querliegenden Drehachse (X-X) montiert ist, die sich in der Nähe der länglichen Enden hinten und gegenüber vom Sockel (36) und vom Deckel (76) befindet;
- der Verbinder eine Querleiste (140) für die Verriegelung des Deckels (76) in geschlossener Position aufweist, die sich über die Oberseite (92) des Deckels (76), auf dem sie als Schiebeelement der Länge nach zwischen einer völlig verriegelten und einer völlig entriegelten Position verschieben läßt;
- und bei dem eine (32) der gegenüber liegenden Seiten (32, 33) der Karte (C) am Boden (P) der Führung aufliegt, während die bewegliche Verriegelungsleiste (140) mit einem Teil der anderen Kartenseite (C) zusammenarbeitet, um die Karte in der Führung (90) zu blockieren,
**dadurch gekennzeichnet, dass** sich die Führung (90) an der Oberseite (92) des Deckels (76) befindet und **dass** die Unterseite (32) der Karte auf dem Boden der Führung aufliegt, welche zumindest teilweise offen ist, so dass der Teil der Unterseite (32) der Karte (C) freigelegt ist, der den Anschlussbereichen (34) gegenüber liegt.

2. Verbinder nach Anspruch 1, **dadurch gekennzeichnet, dass** die bewegliche Verriegelungsleiste (140) als Schiebemontage am Deckel (76) zwischen einer äußerst vorderen Position für die völlige Verriegelung und einer äußerst hinteren Position für die völlige Entriegelung installiert ist.

3. Verbinder nach einem der Ansprüche 1 oder 2, **dadurch gekennzeichnet, dass** der Deckel (76) zwei seitliche und parailele Leisten (78, 80) aufweist, deren innenliegende Querflächen, die sich gegenüber liegen (105, 109), die Führung (90) der Karte seitlich begrenzen, die der Länge nach sowie nach vorne hin geöffnet ist, und die seitlichen Leisten mindestens durch eine Verbindungstraverse (86, 116) miteinander verbunden sind.

4. Verbinder nach Anspruch 3, **dadurch gekennzeichnet, dass** eine Einbauplattform in Form eines Querelements (86) für die Karte (C) vorne in der Nähe der vorderen freien Enden (82, 84) der Leisten (78, 80) angeordnet ist und dass ihre Oberseite (88) eine Ebene (P) für den Einbschub der Unterseite (32) der Karte (C) definiert.

5. Verbinder nach Anspruch 4, **dadurch gekennzeichnet, dass** jede der zwei seitlichen Leisten (78, 80) eine Schiene aufweist (98, 100), die den Boden der koplanaren Führung (90) gegen die Oberseite (88) des Querelements (86) abgrenzt, und **dass** die Karte mit den parallelen Längskanten ihrer Unterseite (32) an den Schienen (94, 96) anliegt.

6. Verbinder nach Anspruch 4 oder 5, **dadurch gekennzeichnet, dass** sich die Schienen (98, 100) der Länge nach deutlich über die vordere Hälfte der seitlichen Leisten erstrecken und dass die Verbindungstraverse (116) aus einer oberen Querplatte besteht, die sich teilweise über die vordere Oberseite (33) der Karte (C) und deutlich über die hintere Hälfte der seitlichen Leisten (78, 80) erstreckt;

7. Verbinder nach einem beliebigen Anspruch 3 bis 6, **dadurch gekennzeichnet, dass** es sich bei der beweglichen Verriegelungsleiste (140) um eine Querplatte (142) handelt, die als Schiebemontage über den seitlichen Leisten montiert ist, und dass ihre gegenüber liegenden Querenden vertikal (154, 156) an den äußeren Querseiten (158, 160) der seitlichen Leisten (78, 80) und dann in Querrichtung nach innen in Form von zwei Laschen umgebogen sind, so **dass** zwei Führungs- und Blockierschächte (180, 182) für die Verriegelungsplatte (142) am Deckel (76) begrenzt werden;

8. Verbinder nach Anspruch 7, **dadurch gekennzeichnet, dass** die zwei äußeren Laschen (172, 174) der Verriegelungsplatte bis unter die Unterseiten (112, 114) der Schienen (98, 100) umgebogen sind.

9. Verbinder nach Anspruch 8 in Kombination mit Anspruch 2, **dadurch gekennzeichnet, dass** die Länge der äußeren Laschen (172, 174) der Verriegelungsplatte (142) in Längsrichtung so gewählt wurde, dass sich die Laschen, wenn sie sich in ihrer äußerst vorderen Verriegelungsposition befinden, der Länge nach und nach vorne hin und bis über die Schienen (98, 100) hinaus erstrecken, um zwei Verriegelungsschächte zu bilden, welche die entsprechenden Nocken (56, 58) des Sockels (36) aufnehmen, die an den zwei parallelen und länglichen (52, 54) Sockelkanten quer nach außen hin überstehen und die, in geschlossener Position, zwischen den länglichen, parallelen und gegenüber liegenden Kanten der Enden aufgenommen werden, die den Schienen gegenüber liegen.

10. Verbinder nach einem beliebigen Anspruch 7 bis 9 in Kombination mit Anspruch 5, **dadurch gekennzeichnet, dass** die Stärke der Verriegelungsplatte (142) im wesentlichen mit der Stärke der hinteren Verbindungstraverse in Plattenform (116) übereinstimmt und dass die vordere Querkante (152) der hinteren Verbindungstraverse einen Anschlag begrenzt, an den die Verriegelungsplatte (142) mit ihrer hinteren Querkante (144) der Länge nach zu liegen kommt, wodurch ihre äußerst hintere Verriegelungsposition bestimmt wird.

11. Verbinder nach einem beliebigen Anspruch 3 bis 10, **dadurch gekennzeichnet, dass** die Stärke des Sockels (36) zwischen seinen parallelen Seiten, unten (50) und oben (42), und die Höhe der seitlichen Leisten (78, 80) so beschaffen sind, dass der Sockel (36) und die Karte (C) bei geschlossener Position des Deckels (76) an der Seite von zwei seitlichen Leisten umgeben sind.

12. Verbinder nach einem beliebigen der vorhergehenden Ansprüche, **dadurch gekennzeichnet, dass** die Drehelemente des Deckels (76) am Sockel (36) aus zwei Drehachs-Abschnitten (72, 74) bestehen, die sich von einem der beiden parallelen und länglichen Kanten (52, 54) des Sockels (36) aus erstrecken, und aus zwei zylinderförmigen und komplementären Führungen (130, 132) bestehen, die sich jeweils am hinteren freien Ende (126, 128) an den seitlichen Leisten (78, 80) des Deckels befinden.

13. Verbinder nach vorhergehendem Anspruch, **dadurch gekennzeichnet, dass** die zylinderförmigen Führungen radial und deutlich senkrecht zur Oberseite (92) des vorderen Deckelteils (76) hin und in Richtung der Oberseite geöffnet sind, damit die Montage der Achsabschnitte (72, 74) in den Führungen (130, 132) durch elastisches Einrasten in Übereinstimmung mit besagter radialer Ausrichtung möglich ist.

14. Verbinder nach einem beliebigen der vorhergehenden Ansprüche, **dadurch gekennzeichnet, dass** er elastische Elemente (206, 218, 220) aufweist, die auf den Deckel (76) im Verhältnis zum Sockel (36) und in Richtung seiner Öffnungsposition permanent Druck ausüben.

15. Verbinder nach vorhergehendem Anspruch, **dadurch gekennzeichnet, dass** die besagten elastischen Elemente auf den Deckel (76) und den Sockel (36) wirken und zwischen Abschnitten gegenüber der Unterseite des Deckels und der Oberseite des Sockels in der Nähe der hinteren, länglichen Enden dieser beiden Elemente angeordnet sind.

16. Elektrischer Verbinder nach Anspruch 14 oder 15, **dadurch gekennzeichnet, dass** die elastischen Mittel der Länge nach zwischen der vorderen Querkante der Karte und der hinteren Querkante des Verbinders angeordnet sind.

17. Verbinder nach Anspruch 15, **dadurch gekennzeichnet, dass** die besagten elastischen Mittel mindestens aus einer umgebogenen Lasche (206) in Federform bestehen, die zwischen der Oberseite (42) des hinteren Sockelteils (36) und einem Teil gegenüber (214) dem hinteren Teil der unteren Seite des Deckels (76) vorsteht.

18. Verbinder nach einem beliebigen der vorhergehenden Ansprüche, **dadurch gekennzeichnet, dass** die elektrischen Kontaktelemente aus Kontaktzungen (206) bestehen, die verformbar sind und die parallel zur längsseitigen Einführrichtung (I) der Karte (C) liegen und jeweils ein freies Anschlußende besitzen, das sich der Länge nach auf Höhe einer Querkante (208) am Sockelende (36) erstreckt.

19. Verbinder nach vorhergehendem Anspruch in Kombination mit Anspruch 17, **dadurch gekennzeichnet, dass** die besagte Lasche (206) und das Anschlußende (44) der elektrischen Kontaktzunge (38) aus einem Guss gefertigt sind.

20. Verbinder nach einem der Ansprüche 17 oder 19, **dadurch gekennzeichnet, dass** jede der besagten Laschen (206) seitlich durch Flügel (210, 212) geschützt wird, die mit dem Sockel (36) aus einem Guss gefertigt sind.

21. Verbinder nach Anspruch 14, **dadurch gekennzeichnet, dass** die elastischen Elemente zumindest ein verformbares Element (218, 220) aufweisen, das zusammen mit dem Deckel (76) aus einem einzigen Kunststoffguss gefertigt ist.

22. Verbinder nach einem beliebigen der vorhergehenden Ansprüche, **dadurch gekennzeichnet, dass** die Oberseite (42) des Sockels (36) in der Nähe ihrer Querkante am vorderen Ende einen reliefartigen Einrastfinger (66) aufweist, der einer abgeschnittenen Kante (70) an der hinteren Querkante (68) der Karte (C) gegenüber liegt.

23. Verbinder nach einem beliebigen Anspruch 7 bis 10, **dadurch gekennzeichnet, dass** der mittlere Teil der Verriegelungsleiste unten einen Pfeil aufweist, so dass ihre untere Innenfläche (143) an dem Abschnitt reibt, welche der Oberseite (33) der Karte gegenüber liegt, und die Karte dadurch blockiert wird.

24. Verbinder nach Anspruch 6 in Kombination mit einem beliebigen Anspruch 7 bis 10, **dadurch gekennzeichnet, dass** die Platte, welche die Verbindungstraverse (116) bildet, und die Platte (142), welche die Verriegelungsleiste bildet, Öffnungen oder Freiräume (196, 150) aufweisen, die einen Test der elektrischen Kontaktelemente (38) erlauben, ohne dass die Karte (C) eingesetzt ist.

25. Elektrischer Verbinder nach Anspruch 3, **dadurch gekennzeichnet, dass** - bei eingesetzter Karte - die gegenüber liegenden Ecken der vorderen Querkante (117) der Karte (C) mit den Anschlagzonen (119, 123) zusammenarbeiten, die eine komplementäre Form besitzen und sich an den hinteren Leistenenden befinden und deren Höhe deutlich die Stärke der Karte übertrifft.

26. Verbinder nach einem beliebigen der vorhergehenden Ansprüche, **dadurch gekennzeichnet, dass** er auf der Masseebene der gedruckten Schaltung elektrische Verbindungselemente einer Platte aufweist, auf der sich der Sockel befindet und welche die elektrostatischen Ladungen der Karte (C) ableitet.

27. Verbinder nach einem beliebigen der vorhergehenden Ansprüche, **dadurch gekennzeichnet, dass** der vordere Eingang der Führung (90) für die Einführung der Karte (C) völlig freigelegt ist, so dass der Verbinder eine Karte aufnehmen kann, die aus dem Verbinder nach außen vorsteht. Die Stärke des vorstehenden Kartenteils ist dabei größer als der Teil, der sich in der Führung befindet.

## Claims

1. Connector (30) for the electrical connection of a smart card (C), a lower face (32) of which includes connection areas (34),
- of the type having a lower base (36) in the form of a sheet of insulating material forming a support for electrical contact elements (36), free contacting ends (40) of which project out of the plane of the upper face (42) of the base (36),
- of the type having an upper cover (76) which includes, in one of its opposed faces (92), a housing (90) which at least partially accommodates the card (C) which is inserted into the housing, longitudinally from the front to the rear, in a direction (I) parallel to its general plane and to that of the cover (76),
- of the type in which the cover (76) is mounted so as to pivot with respect to the base (36), about a transverse pivot axis (X-X) lying near the facing rear longitudinal ends of the base (36) and of the cover (76), between an open contact position and a closed contact position in which the cover (76) is approximately parallel to the base (36), and the connection areas (34) on the card engage with the contacting ends (40) of the contact elements (38) of the base (36),
- of the type having a transverse bar (140) for locking the cover (76) in the closed position, which extends above the upper face (92) of the cover (76) on which it is mounted so as to slide longitudinally between a locked extreme position and an unlocked extreme position, and
- of the type in which one (32) of the opposed faces (32, 33) of the card (C) is pressed against the bottom (P) of the housing, while the movable locking bar (140) engages with a portion of the other face of the card (C) in order to keep the latter in the housing (90),
**characterized in that** the housing (90) is formed in the upper face (92) of the cover (76), and **in that** the lower face (32) of the card is pressed against the bottom of the housing which is cavitied, at least partially, so that that part of the lower face (32) of the card (C) which is opposite the connection areas (34) is clear.

2. Connector according to Claim 1, **characterized in that** the movable locking bar (140) is mounted so as to slide on the cover (76) between a locked front extreme position and an unlocked rear extreme position.

3. Connector according to either of Claims 1 and 2, **characterized in that** the cover (76) includes two parallel lateral vertical members (78, 80), the opposite internal transverse faces (105, 109) of which laterally delimit the housing (90) for the card, which is longitudinally open to the front, these vertical members being joined together by at least one transverse connecting member (86, 116).

4. Connector according to Claim 3, **characterized in that** a platform in the form of a strip (86), on which the card (C) is set, is arranged near the front free ends (82, 84) of the vertical members (78, 80) and its upper face (88) defines a plane (P) on which the lower face (32) of the card (C) is set.

5. Connector according to Claim 4, **characterized in that** each of the two lateral vertical members (78, 80) has a slideway (98, 100) delimiting the bottom of the housing (90), coplanar with the upper face (88) of the strip (86), and **in that** the card is pressed against the slideways (94, 96) by the longitudinal parallel edges of its lower face (32).

6. Connector according to Claim 4 or 5, **characterized in that** the slideways (98, 100) extend longitudinally over approximately the front half of the length of the lateral vertical members, and **in that** the transverse connecting member (116) is an upper transverse plate which extends above a front part of the upper face (33) of the card (C) and over approximately the rear half of the length of the lateral vertical members (78, 80).

7. Connector according to any one of Claims 3 to 6, **characterized in that** the movable locking bar (140) is a transverse plate (142) which is mounted so as to slide above the lateral vertical members, and **in that** its opposite transverse ends are bent vertically (154, 156) along the external transverse faces (158, 160) of the lateral vertical members (78, 80) and then transversely inwards in the form of two tabs, so as to define two channels (180, 182) for guiding and retaining the locking plate (142) on the cover (76).

8. Connector according to Claim 7, **characterized in that** the two end tabs (172, 174) of the locking plate are bent under the lower faces (112, 114) of the slideways (98, 100).

9. Connector according to Claim 8 taken in combination with Claim 2, **characterized in that** the longitudinal length of the end tabs (172, 174) of the locking plate (142) is such that, in the locked front extreme position, they extend longitudinally towards the front beyond the slideways (98, 100) in order to constitute two locking channels which accommodate corresponding lugs (56, 58) on the base (36), these projecting transversely towards the outside from the two longitudinal parallel edges (52, 54) of the base which, in the closed position, are accommodated between the opposite longitudinal parallel edges of the facing ends of the slideways.

10. Connector according to any one of Claims 7 to 9 taken in combination with Claim 5, **characterized in that** the thickness of the locking plate (142) is approximately equal to the thickness of the plate-shaped rear transverse connecting member (116), and **in that** the front transverse edge (152) of the latter delimits a stop against which the locking plate (142) bears longitudinally via its rear transverse edge (144) in order to define its unlocked rear extreme position.

11. Connector according to any one of Claims 3 to 10, **characterized in that** the thickness of the base (36) between its parallel faces, namely the lower face (50) and the upper face (42), and the height of the lateral vertical members (78, 80) are such that, in the closed position of the cover (76), the base (36) and the card (C) are surrounded laterally by the lateral vertical members.

12. Connector according to any one of the preceding claims, **characterized in that** means for pivoting the cover (76) on the base (36) consist of two pivot-pin sections (72, 74) which extend transversely towards the outside, each from one of the two longitudinal parallel edges (52, 54) of the base (36), and of two complementary cylindrical housings (130, 132), each of which is formed at the rear free end (126, 128) of one of the lateral vertical members (78, 80) of the cover.

13. Connector according to the preceding claim, **characterized in that** the cylindrical housings are open radially in a direction approximately perpendicular to the upper face (92) of the front part of the cover (76) and towards the latter in order to allow the pin sections (72, 74) to be mounted in the housings (130, 132) by elastic press-fitting in the said radial direction.

14. Connector according to any one of the preceding claims, **characterized in that** it includes elastic means (206, 218, 220) which, with respect to the base (36), permanently urge the cover (76) towards its open position.

15. Connector according to the preceding claim, **characterized in that** the said elastic means act between the cover (76) and the base (36) and are arranged between facing portions of the lower face of the cover and of the upper face of the base near the rear longitudinal ends of these two components.

16. Electrical connector according to Claim 14 or 15, **characterized in that** the elastic means are arranged longitudinally between the front transverse edge of the card and the rear transverse edge of the connector.

17. Connector according to Claim 15, **characterized in that** the said elastic means consist of at least one spring-forming tab (206) which is bent back in order to extend in a cantilevered fashion between the upper face (42) of the rear part of the base (36) and a facing portion (214) of the rear part of the lower face of the cover (76).

18. Connector according to any one of the preceding claims, **characterized in that** the electrical-contact elements consist of elastically deformable contact blades (206) which extend parallel to the longitudinal direction of insertion (I) of the card (C) and each of which terminates in a free connection end which extends longitudinally at a transverse end edge (208) of the base (36).

19. Connector according to the preceding claim taken in combination with Claim 17, **characterized in that** the said tab (206) is made as one piece with a connection end (44) of an electrical-contact blade (38).

20. Connector according to either of Claims 17 and 19, **characterized in that** each of the said tabs (206) is protected laterally by flanges (210, 212) which are made as one piece with the base (36).

21. Connector according to Claim 14, **characterized in that** the said elastic means include at least one elastically deformable element (218, 220) made as one piece with the cover (76) by moulding a plastic.

22. Connector according to any one of the preceding claims, **characterized in that** the upper face (42) of the base (36) has, near its front transverse end edge, a raised indexing finger (66) which extends opposite a cut flat (70) on the rear transverse edge (68) of the card (C).

23. Connector according to any one of Claims 7 to 10, **characterized in that** the central part of the locking bar dips downwards so that its lower internal face (143) engages frictionally with the facing portion of the upper face (33) of the card in order to constitute a card brake.

24. Connector according to Claim 6 taken in combination with any one of Claims 7 to 10, **characterized in that** the plate forming the transverse connecting member (116) and the plate (142) forming the locking bar include apertures or recesses (196, 150) allowing the electrical-contact elements (38) to be tested in the absence of a card (C).

25. Electrical connector according to Claim 3, **characterized in that**, in the inserted position of the card, the opposite corners of the front transverse edge (117) of the card (C) engage with stop regions (119, 123) of complementary shape which are arranged at the rear ends of the vertical members and the height of which is significantly greater than the thickness of the card.

26. Connector according to any one of the preceding claims, **characterized in that** it includes means of electrical connection to the earth plane of the printed circuit of a board which supports the base, in order to remove any electrostatic charge from the card (C).

27. Connector according to any one of the preceding claims, **characterized in that** the front entrance of the housing (90) for insertion of the card (C) is entirely clear so that the connector can accommodate a card, which projects to the outside of the connector, the projecting portion of which has a greater thickness than the part accommodated in the housing.
